# EUROPEAN PATENT APPLICATION

(11) **EP 1 167 393 A1**
(43) Date of publication of application: **02.01.2002**
(21) Application number: 00900821.0
(22) Date of filing: 19.01.2000
(51) Int. Cl.: C08F 4/645, C08F 4/646, C08F 10/00

(54) **CATALYST FOR OLEFIN POLYMERIZATION AND PROCESS FOR PRODUCING OLEFIN POLYMER**

(30) Priority: 29.01.1999 JP 2207599; 26.05.1999 JP 14630599
(71) Applicant: IDEMITSU PETROCHEMICAL CO., LTD., Tokyo 130-0015 (JP)
(72) Inventor: YABUNOUCHI, Nobuhiro, Ichihara-shi, Chiba 299-0107 (JP); MINAMI, Yutaka, Ichihara-shi, Chiba 299-0107 (JP); TOMOTSU, Norio, Ichihara-shi, Chiba 299-0107 (JP)
(74) Representative: Gille Hrabal Struck Neidlein Prop Roos
(86) International application number: JP0000229
(87) International publication number: WO0044793

(57) **Abstract**

The invention includes catalysts for polymerization of olefins, comprising (A) a transition metal compound, (B) an oxygen-containing compound, or a compound capable of reacting with a transition metal compound to form an ionic complex, (C) a specific compound such as a reaction product of triphenylmethyl alcohol and triisobutylaluminium, and optionally (D) an alkylating agent, and methods for producing olefinic polymers in the presence of such catalysts. The catalysts have the advantages of enhancing the polymerization activity and reducing the amount of the promoter such as oxygen-containing compounds, etc. Using them, olefinic polymers can be produced efficiently and inexpensively.

## Description

### TECHNICAL FIELD

The present invention relates to catalysts for polymerization of olefins, and to methods for producing olefinic polymers. Precisely, it relates to catalysts for olefin polymerization comprising, as one component, a specific compound, and to inexpensive and efficient methods for producing olefinic polymers with the catalysts.

### BACKGROUND ART

Recently, metallocene catalysts have been developed and used for olefinic polymer production, which comprise, as the catalyst component, a transition metal compound having a π-ligand bonded to the center metal element via a group.

To exhibit satisfactory activity, however, the catalysts of that type require a large amount of promoters such as aluminoxanes and the like. Therefore, they are problematic in that the total catalyst costs are inevitably high, and, in addition, the catalyst residue resulting from the promoter used often remains in the polymers produced thereby unfavorably coloring the polymers.

In that situation, techniques of using clay, clay minerals and the like along with the catalysts have been proposed so as to reduce the amount of the promoters to be used along with them (Japanese Patent Laid-Open Nos. 301917/1993, 136047/1994, 164510/1997, 009206/1989, etc.).

At present, however, even these techniques could not as yet provide catalysts having satisfactorily high activity.

The present invention is to provide catalysts for olefin polymerization capable of efficiently and inexpensively producing olefinic polymers, in particular, those essentially having a syndiotactic structure, and to provide methods for producing olefinic polymers.

### DISCLOSURE OF THE INVENTION

We, the present inventors have assiduously studied so as to attain the object as above, and, as a result, have found that polymerization catalysts containing, as one component, a specific compound have improved polymerization activity and therefore the amount of the promoters such as oxygen-containing compounds and others to be used with them can be reduced. On the basis of this finding, we have completed the present invention.

The invention includes two aspects as mentioned below. One aspect of the invention is to provide a catalyst for polymerization of olefins and a method for producing olefinic polymers, which are as follows:
1. A catalyst for polymerization of olefins, which comprises:
   (A) a transition metal compound,
   (B) an oxygen-containing compound,
   (C) a compound of a general formula (I-1):

      ((R¹)₃-C-Y)n-Z-(R²)m-n (I-1)

      wherein R¹ represents an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R¹'s may be the same or different, and R¹'s may be optionally bonded to each other to form a cyclic structure; Y represents an element of Group 16; Z represents a metal element of Groups 2 to 13; R² represents a hydrocarbon group; m is an integer, indicating the valency of the metal element Z; and n is an integer of from 1 to (m-1),
      and optionally,
   (D) an alkylating agent.
2. The catalyst of above 1 for polymerization of olefins, wherein, in (C), Y is oxygen and Z is aluminium.
3. The catalyst of above 1 for polymerization of olefins, wherein the compound (C) is a reaction product of a compound of a general formula, (R¹)₃-C-OR³, and a compound of a general formula, Z(R²)m:
   in which R¹ represents an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R¹'s may be the same or different, and R¹'s may be optionally bonded to each other to form a cyclic structure; R³ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group; Z represents a metal element of Groups 2 to 13; m is an integer, indicating the valency of the metal element Z; and R² represents a hydrocarbon group.
4. A catalyst for polymerization of olefins, which comprises:
   (A) a transition metal compound,
   (B) an oxygen-containing compound,
   (C1) a compound of a general formula, (R¹)₃-C-OR³: wherein R¹ represents an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R¹'s may be the same or different, and R¹'s may be optionally bonded to each other to form a cyclic structure; R³ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group,
   (C2) a compound of a general formula, Z(R²)m, wherein Z represents a metal element of Groups 2 to 13; m is an integer, indicating the valency of the metal element Z; and R² represents a hydrocarbon group,
      and optionally,
   (D) an alkylating agent.
5. The catalyst of any of above 1 to 4 for polymerization of olefins, wherein at least one of three R¹'s is an aromatic hydrocarbon group having from 6 to 30 carbon atoms.
6. The catalyst of any of above 1 to 4 for polymerization of olefins, wherein three R¹'s are all aromatic hydrocarbon groups each having from 6 to 30 carbon atoms.
7. The catalyst of any of above 1 to 4 for polymerization of olefins, wherein three R¹'s are all phenyl groups.
8. The catalyst of any of above 1 to 7 for polymerization of olefins, wherein R² is an alkyl group having at least 2 carbon atoms.
9. The catalyst of any of above 3 to 8 for polymerization of olefins, wherein Z is aluminium.
10. The catalyst of any of above 1 to 9 for polymerization of olefins, wherein the transition metal compound (A) is represented by any of the following general formulae (I-2) to (I-6):

   Q¹ ₐ(C₅H_{5-a-b}R⁸ _{b}) (C₅H_{5-a-c}R⁹ _{c})M¹X¹Y¹ (I-2)

   Q² ₐ(C₅H_{5-a-d}R¹⁰ _{d}) Z¹M¹X¹Y¹ (I-3)

   (C₅H₅₋ₑR¹¹ ₑ)M¹X¹Y¹W¹ (I-4)

   M¹X¹Y¹W¹U¹ (I-5)

   L¹L²M²X¹Y¹ (I-6)

   in which Q¹ represents a bonding group that crosslinks the two conjugated five-membered cyclic ligands (C₅H_{5-a-b}R⁸_{b}) and (C₅H_{5-a-c}R⁹_{c}); Q² represents a bonding group that crosslinks the conjugated five-membered cyclic ligand (C₅H_{5-a-d}R¹⁰_{d}) and the group Z¹; R⁸, R⁹, R¹⁰ and R¹¹ each represent a hydrocarbon group, a halogen atom, an alkoxy group, a silicon-containing hydrocarbon group, a phosphorus-containing hydrocarbon group, a nitrogen-containing hydrocarbon group, or a boron-containing hydrocarbon group; and a plurality of these groups, if any, may be the same or different, and may be bonded to each other to form a cyclic structure; a represents 0, 1 or 2; b, c and d each represent an integer of from 0 to 5 when a = 0, or an integer of from 0 to 4 when a = 1, or an integer of from 0 to 3 when a = 2; e is an integer of from 0 to 5; M¹ represents a transition metal of Groups 4 to 6 of the Periodic Table; M² represents a transition metal of Groups 8 to 10 of the Periodic Table; L¹ and L² each represent a coordination-bonding ligand; X¹, Y¹, Z¹, W¹ and U¹ each represent a covalent-bonding or ionic-bonding ligand; and L¹, L², X¹, Y¹, Z¹, W¹ and U¹ may be bonded to each other to form a cyclic structure.
11. The catalyst of above 10 for polymerization of olefins, wherein, in the transition metal compound (A) of formula (I-4), the group (C₅H₅₋ₑR¹¹ₑ) is represented by any of the following general formulae (I) to (VII): 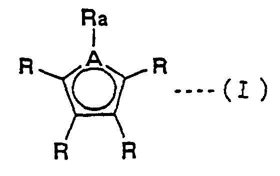 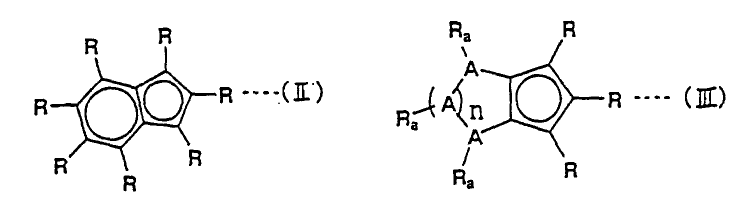 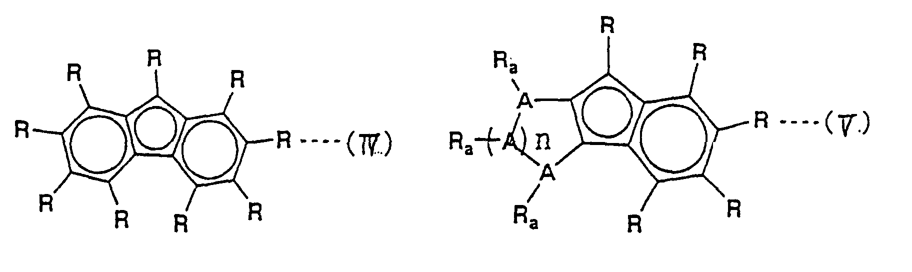 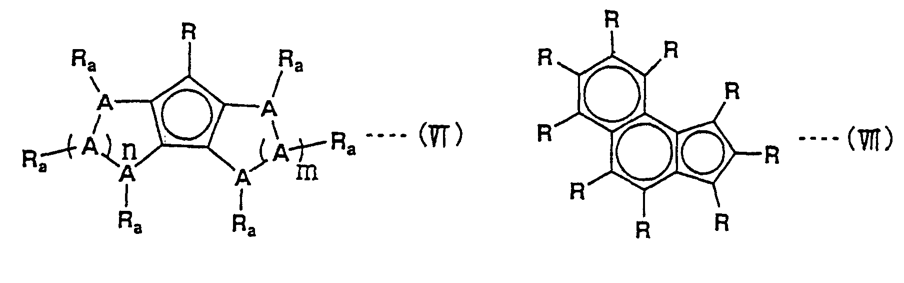 wherein A represents an element of Group 13, 14, 15 or 16, and plural A's may be the same or different; R represents a hydrogen atom, a halogen atom, an aliphatic hydrocarbon group having from 1. to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl or alkylsilylalkyl group having from 3 to 30 carbon atoms, and R's may be the same or different, and may be optionally bonded to each other to form a cyclic structure; a represents 0, 1 or 2; and n and m each represent an integer of at least 1.
12. A method for producing olefinic polymers, which comprises polymerizing olefins in the presence of the polymerization catalyst of any of above 1 to 11.

Another aspect of the invention is to provide a catalyst for polymerization of olefins and a method for producing olefinic polymers, which are as follows:
1. A catalyst for polymerization of olefins, which comprises:
   (A) a transition metal compound,
   (B) a compound capable of reacting with a transition metal compound to form an ionic complex,
   (C) a compound of a general formula (II-1):

      ((R³¹)₃-X²⁰-Y²⁰)n-Z²⁰-(R³²)m-n (II-1)

      wherein R³¹ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R³¹'s may be the same or different, and R³¹'s may be optionally bonded to each other to form a cyclic structure; X²⁰ represents an element of Group 14; Y²⁰ represents an element of Group 16; Z²⁰ represents a metal element of Groups 2 to 13; R³² represents a hydrocarbon group; m is an integer, indicating the valency of the metal element Z²⁰; and n is an integer of from 1 to (m-1),
      and optionally,
   (D) an alkylating agent.
2. The catalyst of above 1 for polymerization of olefins; wherein, in (C), Y²⁰ is oxygen and Z²⁰ is aluminium.
3. The catalyst of above 1 for polymerization of olefins, wherein the compound (C) is a reaction product of a compound of a general formula, (R³¹)₃-C-OR³³, and a compound of a general formula, Z²⁰(R³²)m:
   in which R³¹ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R³¹'s may be the same or different, and R³¹'s may be optionally bonded to each other to form a cyclic structure; Z²⁰ represents a metal element of Groups 2 to 13; R³² represents a hydrocarbon group; R³³ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, and may be the same or different; m is an integer, indicating the valency of the metal element Z²⁰; and n is an integer of from 1 to (m-1).
4. A catalyst for polymerization of olefins, which comprises:
   (A) a transition metal compound,
   (B) a compound capable of reacting with a transition metal compound to form an ionic complex,
   (C1) a compound of a general formula, (R³¹)₃-C-OR³³: wherein R³¹ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R³¹'s may be the same or different, and R³¹'s may be optionally bonded to each other to form a cyclic structure; R³³ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, and may be the same or different,
   (C2) a compound of a general formula, Z²⁰(R³²)m, wherein Z²⁰ represents a metal element of Groups 2 to 13; m is an integer, indicating the valency of the metal element Z²⁰; and R³² represents a hydrocarbon group,
      and optionally,
   (D) an alkylating agent.
5. The catalyst of any of above 1 to 4 for polymerization of olefins, wherein at least one of three R³¹'s is an aromatic hydrocarbon group having from 6 to 30 carbon atoms.
6. The catalyst of any of above 1 to 4 for polymerization of olefins, wherein three R³¹'s are all aromatic hydrocarbon groups each having from 6 to 30 carbon atoms.
7. The catalyst of any of above 1 to 4 for polymerization of olefins, wherein three R³¹'s are all phenyl groups.
8. The catalyst of any of above 1 to 7 for polymerization of olefins, wherein R³² is an alkyl group having at least 2 carbon atoms.
9. The catalyst of any of above 3 to 8 for polymerization of olefins, wherein Z is aluminium.
10. The catalyst of any of above 1 to 9 for polymerization of olefins, wherein the transition metal compound (A) is represented by any of the following general formulae (II-2) to (II-6):

   Q²¹ ₐ(C₅S_{5-a-b}R³⁸ _{b}) (C₅H_{5-a-c}R³⁹ _{c})M²¹X²¹Y²¹ (II-2)

   Q²¹ ₐ(C₅H_{5-a-d}R⁴⁰ _{d}) Z²¹M²¹X²¹Y²¹ (II-3)

   (C₅H₅₋ₑR⁴¹ ₑ)M²¹X²¹Y²¹W²¹ (II-4)

   M²¹X²¹Y²¹W²¹U²¹ (II-5)

   L²¹L²²M²²X²¹Y²¹ (II-6)

   in which Q²¹ represents a bonding group that crosslinks the two conjugated five-membered cyclic ligands (C₅H_{5-a-b}R³⁸_{b}) and (C₅H_{5-a-c}R³⁹_{c}); Q²² represents a bonding group that crosslinks the conjugated five-membered cyclic ligand (C₅H_{5-a-d}R⁴⁰_{d}) and the group Z²¹; R³⁸, R³⁹, R⁴⁰ and R⁴¹ each represent a hydrocarbon group, a halogen atom, an alkoxy group, a silicon-containing hydrocarbon group, a phosphorus-containing hydrocarbon group, a nitrogen-containing hydrocarbon group, or a boron-containing hydrocarbon group; and a plurality of these groups, if any, may be the same or different, and may be bonded to each other to form a cyclic structure; a represents 0, 1 or 2; b, c and d each represent an integer of from 0 to 5 when a = 0, or an integer of from 0 to 4 when a = 1, or an integer of from 0 to 3 when a = 2; e is an integer of from 0 to 5; M²¹ represents a transition metal of Groups 4 to 6 of the Periodic Table; M²² represents a transition metal of Groups 8 to 10 of the Periodic Table; L²¹ and L²² each represent a coordination-bonding ligand; X²¹, Y²¹, Z²¹, W²¹ and U²¹ each represent a covalent-bonding or ionic-bonding ligand; and L²¹, L²², X²¹, Y²¹, Z²¹, W²¹ and U²¹ may be bonded to each other to form a cyclic structure.
11. The catalyst of above 10 for polymerization of olefins, wherein, in the transition metal compound (A) of formula (II-4), the group (C₅H₅₋ₑR⁴¹ₑ) is represented by any of the following general formulae (I) to (VII): 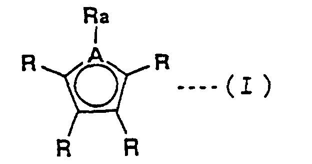 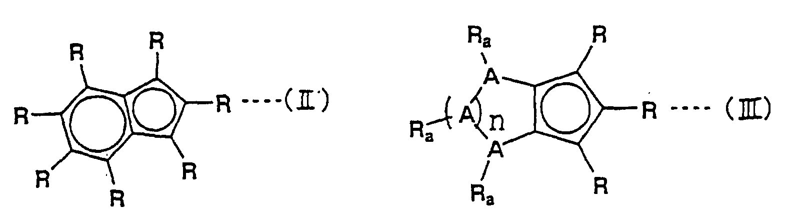 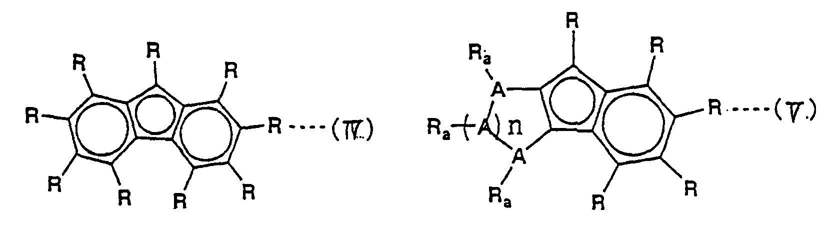 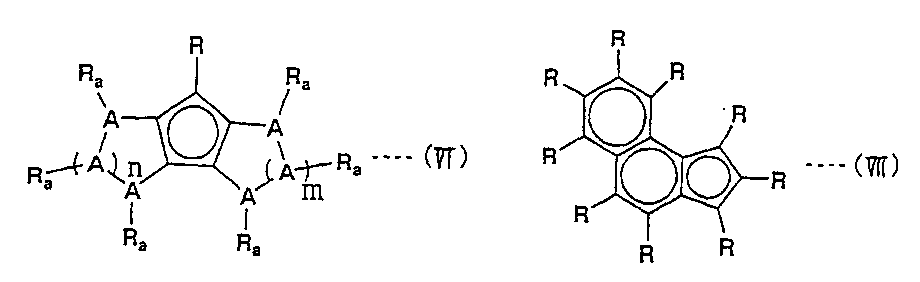 wherein A represents an element of Group 13, 14, 15 or 16, and plural A's may be the same or different; R represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl or akylsilylalkyl group having from 3 to 30 carbon atoms, and R's may be the same or different, and may be optionally bonded to each other to form a cyclic structure; a represents 0, 1 or 2; and n and m each represent an integer of at least 1.
12. A method for producing olefinic polymers, which comprises polymerizing olefins in the presence of the polymerization catalyst of any of above 1 to 11.

### BEST MODES OF CARRYING OUT THE INVENTION

The first and second aspects of the invention are described below with reference to their embodiments.

### [First aspect of the invention]

In this section, the first aspect of the invention will be simply referred to as "the invention".

### I. Catalyst for polymerization of olefins:

### 1. Components of catalyst for polymerization of olefins:

The catalyst of the invention for polymerization of olefins comprises (A) a transition metal compound, (B) an oxygen-containing compound, and (C) a compound of formula (I) which will be described in detail hereinunder, and optionally (D) an alkylating agent. The constituent components are described below.

### (1) (A) Transition metal compound:

Various types of transition metal compounds are usable as the component (A) in the invention, but preferred are transition metal compounds of Groups 4 to 6 of the Periodic Table, or transition metal compounds of Groups 8 to 10 thereof. As the transition metal compounds of Groups 4 to 6 of the Periodic Table, preferred are those of the following general formulae (I-2) to (I-5). As the transition metal compounds of Groups 8 to 10 of the Periodic Table, preferred are those of the following general formula (I-6).

Q¹ ₐ(C₅H_{5-a-b}R⁸ _{b}) (C₅H_{5-a-c}R⁹ _{c})M¹X¹Y¹ (I-2)

Q² ₐ(C₅H_{5-a-d}R¹⁰ _{d})Z¹M¹X¹Y¹ (I-3)

(C₅H₅₋ₑR¹¹ ₑ)M¹X¹Y¹W¹ (I-4)

M¹X¹Y¹W¹U¹ (I-5)

L¹L²M²X¹Y¹ (I-6)

wherein Q¹ represents a bonding group that crosslinks the two conjugated five-membered cyclic ligands (C₅H_{5-a-b}R⁸_{b}) and (C₅H_{5-a-c}R⁹_{c}) ; Q² represents a bonding group that crosslinks the conjugated five-membered cyclic ligand (C₅H_{5-a-d}R¹⁰_{d}) and the group Z¹; R⁸, R⁹, R¹⁰ and R¹¹ each represent a hydrocarbon group, a halogen atom, an alkoxy group, a silicon-containing hydrocarbon group, a phosphorus-containing hydrocarbon group, a nitrogen-containing hydrocarbon group, or a boron-containing hydrocarbon group; and a plurality of these groups, if any, may be the same or different, and may be bonded to each other to form a cyclic structure; a represents 0, 1 or 2; b, c and d each represent an integer of from 0 to 5 when a = 0, or an integer of from 0 to 4 when a = 1, or an integer of from 0 to 3 when a = 2; e is an integer of from 0 to 5; M¹ represents a transition metal of Groups 4 to 6 of the Periodic Table; M² represents a transition metal of Groups 8 to 10 of the Periodic Table; L¹ and L² each represent a coordination-bonding ligand; X¹, Y¹, Z¹, W¹ and U¹ each represent a covalent-bonding or ionic-bonding ligand; and L¹, L², X¹, Y¹, Z¹, W¹ and U¹ may be bonded to each other to form a cyclic structure.

Specific examples of Q¹ and Q² in formulae (I-2) and (I-3) include (1) an alkylene group having from 1 to 4 carbon atoms, or a cycloalkylene group, or the group substituted by a lower alkyl or phenyl group at its side chain, such as a methylene group, an ethylene group, an isopropylene group, a methylphenylmethylene group, a diphenylmethylene group, a cyclohexylene group, etc.; (2) a silylene group, or an oligosilylene group, or the group substituted by a lower alkyl or phenyl group at its side chain, such as a silylene group, a dimethylsilylene group, a methylphenylsilylene group, a diphenylsilylene group, a disilylene group, a tetramethyldisilylene group, etc.; and (3) a hydrocarbon group (e.g., a lower alkyl group, a phenyl group, a hydrocarbyloxy group (preferably, a lower alkoxy group), etc.) containing germanium, phosphorus, nitrogen, boron or aluminium, such as a (CH₃)₂Ge group, a (C₆H₅)₂Ge group, a (CH₃)P group, a (C₆H₅)P group, a (C₄H₉)N group, a (C₆H₅)N group, a (CH₃)B group, a (C₄H₉)B group, a (C₆H₅)B group, a (C₆H₅)Al group, a (CH₃O)Al group, etc. Of those, preferred are alkylene groups and silylene groups.

(C₅H_{5-a-b}R⁸_{b}), (C₅H_{5-a-c}R⁹_{c}) and (C₅H_{5-a-d}R¹⁰_{d}) are conjugated, 5-membered cyclic ligands, in which R⁸, R⁹ and R¹⁰ each represent a hydrocarbon group, a halogen atom, an alkoxy group, a silicon-containing hydrocarbon group, a phosphorus-containing hydrocarbon group, a nitrogen-containing hydrocarbon group, or a boron-containing hydrocarbon group; a represents 0, 1 or 2; and b, c and d each represent an integer of from 0 to 5 when a = 0, or an integer of from 0 to 4 when a = 1, or an integer of from 0 to 3 when a = 2. The hydrocarbon group preferably has from 1 to 20 carbon atoms, more preferably from 1 to 12 carbon atoms. The hydrocarbon group may be a monovalent one that bonds to the cyclopentadienyl group of a conjugated, 5-membered cyclic group. Two of plural hydrocarbon groups, if any, may be bonded to each other to form a cyclic structure along with a part of the cyclopentadienyl group. Specific examples of those conjugated, 5-membered cyclic ligands are substituted or unsubstituted cyclopentadienyl groups, indenyl groups and fluorenyl groups. The halogen atom includes chlorine, bromine, iodine and fluorine atoms. The alkoxy group preferably has from 1 to 12 carbon atoms. The silicon-containing hydrocarbon group includes, for example, groups of -Si(R¹²) (R¹³) (R¹⁴), in which R¹², R¹³ and R¹⁴ each represent a hydrocarbon group having from 1 to 24 carbon atoms. As the phosphorus-containing hydrocarbon group, the nitrogen-containing hydrocarbon group and the boron-containing hydrocarbon group, for example, mentioned are groups of -P(R¹⁵)(R¹⁶), -N(R¹⁵)(R¹⁶), and-B(R¹⁵)(R¹⁶), respectively, in which R¹⁵ and R¹⁶ each represent a hydrocarbon group having from 1 to 18 carbon atoms. Plural R⁸'s, R⁹'s and R¹⁰'s, if any, may be the same or different ones, respectively. In formula (I-2), the conjugated, 5-membered cyclic ligands (C₅H_{5-a-b}R⁸_{b}) and (C₅H_{5-a-c}R⁹_{c}) may be the same or different ones.

M¹ represents a transition metal element of Groups 4 to 6 of the Periodic Table, including, for example, titanium, zirconium, hafnium, niobium, molybdenum, tungsten, etc. Of those, preferred are titanium, zirconium and hafnium, and more preferred is zirconium. Z¹ represents a covalent-bonding ligand, including, for example, oxygen (-O-), sulfur (-S-), an alkoxy group having from 1 to 20, preferably from 1 to 10 carbon atoms, a thioalkoxy group having from 1 to 20, preferably from 1 to 12 carbon atoms, a nitrogen-containing hydrocarbon group having from 1 to 40, preferably from 1 to 18 carbon atoms, and a phosphorus-containing hydrocarbon group having from 1 to 40, preferably from 1 to 18 carbon atoms. X¹ and Y¹ each represent a covalent-bonding ligand, including, for example, a hydrogen atom, a halogen atom, a hydrocarbon group having from 1 to 20, preferably from 1 to 10 carbon atoms, an alkoxy group having from 1 to 20, preferably from 1 to 10 carbon atoms, an amino group, a phosphorus-containing hydrocarbon group having from 1 to 20, preferably from 1 to 12 carbon atoms (e.g., a diphenylphosphine group, etc.), a silicon-containing hydrocarbon group having from 1 to 20, preferably from 1 to 12 carbon atoms (e.g., a trimethylsilyl group, etc.), and a boron compound residue having a hydrocarbon group with from 1 to 20, preferably from 1 to 12 carbon atoms or having halogens (e.g., B(C₆H₅)₄, BF₄). Of those, preferred are halogen atoms and hydrocarbon groups. X¹ and Y¹ may be the same or different, and they may be bonded to each other to form a cyclic structure.

In formula (I-4), M¹ represents a transition metal of Groups 4 to 6 of the Periodic Table, such as that mentioned above; and X¹ and Y¹ have the same meanings as above. The meanings of X¹ and Y¹ shall apply to W¹. Namely, W¹ is a covalent-bonding ligand, including, for example, a hydrogen atom, a halogen atom, a hydrocarbon group having from 1 to 20, preferably from 1 to 10 carbon atoms, an alkoxy group having from 1 to 20, preferably from 1 to 10 carbon atoms, an amino group, a phosphorus-containing hydrocarbon group having from 1 to 20, preferably from 1 to 12 carbon atoms (e.g., a diphenylphosphine group, etc.), a silicon-containing hydrocarbon group having from 1 to 20, preferably from 1 to 12 carbon atoms (e.g., a trimethylsilyl group, etc.), and a boron compound residue having a hydrocarbon group with from 1 to 20, preferably from 1 to 12 carbon atoms or having halogens (e.g., B(C₆H₅)₄, BF₄). Of those, preferred are halogen atoms and hydrocarbon groups. X¹, Y¹ and W¹ may be the same or different, and they may be bonded to each other to form a cyclic structure.

In formula (I-5), M¹ represents a transition metal of Groups 4 to 6 of the Periodic Table, such as that mentioned above; and X¹, Y¹ and W¹ have the same meanings as above. The meanings of X¹, Y¹ and W¹ shall apply to U¹. Namely, U¹ is a covalent-bonding ligand, including, for example, a hydrogen atom, a halogen atom, a hydrocarbon group having from 1 to 20, preferably from 1 to 10 carbon atoms, an alkoxy group having from 1 to 20, preferably from 1 to 10 carbon atoms, an amino group, a phosphorus-containing hydrocarbon group having from 1 to 20, preferably from 1 to 12 carbon atoms (e.g., a diphenylphosphine group, etc.), a silicon-containing hydrocarbon group having from 1 to 20, preferably from 1 to 12 carbon atoms (e.g., a trimethylsilyl group, etc.), and a boron compound residue having a hydrocarbon group with from 1 to 20, preferably from 1 to 12 carbon atoms or having halogens (e.g., B(C₆H₅)₄, BF₄). Of those, preferred are halogen atoms and hydrocarbon groups. X¹, Y¹, W¹ and U¹ may be the same or different, and they may be bonded to each other to form a cyclic structure.
(I) As specific examples of the transition metal compounds of formulae (I-2) and (I-3), mentioned are the following compounds. In the compounds to be mentioned below, titanium may be replaced with zirconium, and such zirconium compounds are also referred to herein to the same effect.
   (1) Transition metal compounds not having a crosslinkable bonding group but having two conjugated, 5-membered cyclic ligands, such as bis(cyclopentadienyl)titanium dichloride, bis(methylcyclopentadienyl)titanium dichloride, bis(dimethylcyclopentadienyl)titanium dichloride, bis(trimethylcyclopentadienyl)titanium dichloride, bis(tetramethylcyclopentadienyl)titanium dichloride, bis(pentamethylcyclopentadienyl)titanium dichloride, bis(n-butylcyclopentadienyl)titanium dichloride, bis(indenyl)titanium dichloride, bis(fluorenyl)titanium dichloride, bis(cyclopentadienyl)titanium chlorohydride, bis(cyclopentadienyl)methyltitanium chloride, bis(cyclopentadienyl)ethyltitanium chloride, bis(cyclopentadienyl)phenyltitanium chloride, bis(cyclopentadienyl)dimethyltitanium, bis(cyclopentadienyl)diphenyltitanium, bis(cyclopentadienyl)dineopentyltitanium, bis(cyclopentadienyl)dihydrotitanium, (cyclopentadienyl)(indenyl)titanium dichloride, (cyclopentadienyl)(fluorenyl)titanium dichloride, etc.
   (2) Transition metal compounds having two conjugated, 5-membered cyclic ligands, in which the two ligands are crosslinked with an alkylene group, such as methylenebis(indenyl)titanium dichloride, ethylenebis(indenyl)titanium dichloride, methylenebis(indenyl)titanium chlorohydride, ethylenebis(indenyl)methyltitanium chloride, ethylenebis(indenyl)methoxychlorotitanium, ethylenebis(indenyl)titanium diethoxide, ethylenebis(indenyl)dimethyltitanium, ethylenebis(4,5,6,7-tetrahydroindenyl)titanium dichloride, ethylenebis(2-methylindenyl)titanium dichloride, ethylenebis(2,4-dimethylindenyl)titanium dichloride, ethylenebis(2-methyl-4-trimethylsilylindenyl)titanium dichloride, ethylenebis(2,4-dimethyl-5,6,7-trihydroindenyl)titanium dichloride, ethylene(2,4-dimethylcyclopentadienyl)(3',5'-dimethylcyclopentadienyl)titanium dichloride, ethylene(2-methyl-4-t-butylcyclopentadienyl)(3'-t-butyl-5'-methylcyclopentadienyl)titanium dichloride, ethylene(2,3,5-trimethylcyclopentadienyl)(2',4',5'-trimethylcyclopentadienyl)titanium dichloride, isopropylidenebis(2-methylindenyl)titanium dichloride, isopropylidenebis(indenyl)titanium dichloride, isopropylidenebis(2,4-dimethylindenyl)titanium dichloride, isopropylidene(2,4-dimethylcyclopentadienyl)(3',5'-dimethylcyclopentadienyl)titanium dichloride, isopropylidene(2-methyl-4-t-butylcyclopentadienyl)(3'-t-butyl-5'-methylcyclopentadienyl)titanium dichloride, methylene(cyclopentadienyl)(3,4-dimethylcyclopentadienyl)titanium dichloride, methylene(cyclopentadienyl)(3,4-dimethylcyclopentadienyl)titanium chlorohydride, methylene(cyclopentadienyl)(3,4-dimethylcyclopentadienyl)dimethyltitanium, methylene(cyclopentadienyl)(3,4-dimethylcyclopentadienyl)diphenyltitanium, methylene(cyclopentadienyl)(trimethylcyclopentadienyl)titanium dichloride, methylene(cyclopentadienyl)(tetramethylcyclopentadienyl)titanium dichloride, isopropylidene(cyclopentadienyl)(3,4-dimethylcyclopentadienyl)titanium dichloride, isopropylidene(cyclopentadienyl)(2,3,4,5-tetramethylcyclopentadienyl)titanium dichloride, isopropylidene(cyclopentadienyl)(3-methylindenyl)titanium dichloride, isopropylidene(cyclopentadienyl)(fluorenyl)titanium dichloride, isopropylidene(2-methylcyclopentadienyl)(fluorenyl)titanium dichloride, isopropylidene(2,5-dimethylcyclopentadienyl)(3,4-dimethylcyclopentadienyl)titanium dichloride, isopropylidene(2,5-dimethylcyclopentadienyl)(fluorenyl)titanium dichloride, ethylene(cyclopentadienyl)(3,5-dimethylcyclopentadienyl)titanium dichloride, ethylene(cyclopentadienyl)(fluorenyl)titanium dichloride, ethylene(2,5-dimethylcyclopentadienyl)(fluorenyl)titanium dichloride, ethylene(2,5-diethylcyclopentadienyl)(fluorenyl)titanium dichloride, diphenylmethylene(cyclopentadienyl)(3,4-diethylcyclopentadienyl)titanium dichloride, diphenylmethylene(cyclopentadienyl)(3,4-diethylcyclopentadienyl)titanium dichloride, cyclohexylidene(cyclopentadienyl)(fluorenyl)titanium dichloride, cyclohexylidene(2,5-dimethylcyclopentadienyl)(3',4'-dimethylcyclopentadienyl)titanium dichloride, etc.
   (3) Transition metal compounds having two silylene-crosslinked, conjugated, 5-membered cyclic ligands, such as dimethylsilylenebis(indenyl)titanium dichloride, dimethylsilylenebis(4,5,6,7-tetrahydroindenyl)titanium dichloride, dimethylsilylenebis(2-methylindenyl)titanium dichloride, dimethylsilylenebis(2,4-dimethylindenyl)titanium dichloride, dimethylsilylenebis(2,4-dimethylcyclopentadienyl)(3',5'-dimethylcyclopentadienyl)titanium dichloride, phenylmethylsilylenebis(indenyl)titanium dichloride, phenylmethylsilylenebis(4,5,6,7-tetrahydroindenyl)titanium dichloride, phenylmethylsilylenebis(2,4-dimethylindenyl)titanium dichloride, phenylmethylsilylene(2,4-dimethylcyclopentadienyl)(3',5'-dimethylcyclopentadienyl)titanium dichloride, phenylmethylsilylene(2,3,5-trimethylcyclopentadienyl)(2',4',5'-trimethylcyclopentadienyl)titanium dichloride, phenylmethylsilylenebis(tetramethylcyclopentadienyl)-titanium dichloride, diphenylsilylenebis(2,4-dimethylindenyl)titanium dichloride, diphenylsilylenebis(indenyl)titanium dichloride, diphenylsilylenebis(2-methylindenyl)titanium dichloride, tetramethyldisilylenebis(indenyl)titanium dichloride, tetramethyldis ilylenebis(cyclopentadienyl)titanium dichloride, tetramethyldisilylene(3-methylcyclopentadienyl)(indenyl)titanium dichloride, dimethylsilylene(cyclopentadienyl)(3,4-dimethylcyclopentadienyl)titanium dichloride, dimethyls ilylene(cyclopentadienyl)(trimethylcyclopentadienyl)titanium dichloride, dimethylsilylene(cyclopentadienyl)(tetramethylcyclopentadienyl)titanium dichloride, dimethylsilylene(cyclopentadienyl)(3,4-diethylcyclopentadieny)titanium dichloride, dimethyls ilylene(cyclopentadienyl)(triethylcyclopentadienyl)titanium dichloride, dimethylsilylene(cyclopentadienyl)(tetraethylcyclopentadienyl)titanium dichloride, dimethylsilylene(cyclopentadienyl)(fluorenyl)titanium dichloride, dimethylsilylene(cyclopentadienyl)(2,7-di-t-butylfluorenyl)titanium dichloride, dimethylsilylene(cyclopentadienyl)(octahydrofluorenyl)titanium dichloride, dimethylsilylene(2-methylcyclopentadienyl)(fluorenyl)titanium dichloride, dimethylsilylene(2,5-dimethylcyclopentadienyl)(fluorenyl)titanium dichloride, dimethylsilylene(2-ethylcyclopentadienyl)(fluorenyl)titanium dichloride, dimethylsilylene(2,5-diethylcyclopentadienyl)(fluorenyl)titanium dichloride, diethylsilylene(2-methylcyclopentadienyl)(2',7'-di-t-butylfluorenyl)titanium dichloride, dimethylsilylene(2,5-dimethylcyclopentadienyl)(2',7'-di-t-butylfluorenyl)titanium dichloride, dimethylsilylene(2-ethylcyclopentadienyl)(2',7'-di-t-butylfluorenyl)titanium dichloride, dimethylsilylene(diethylcyclopentadienyl)(2,7-di-t-butylfluorenyl)titanium dichloride, dimethylsilylene(methylcyclopentadienyl)(octahydrofluorenyl)titanium dichloride, dimethylsilylene-(dimethylcyclopentadienyl)(octahydrofluorenyl)titanium dichloride, dimethylsilylene(ethylcyclopentadienyl)(octahydrofluorenyl)titanium dichloride, dimethylsilylene(diethylcyclopentadienyl)(octahydrofluorenyl)titanium dichloride, etc.
   (4) Transition metal compounds having two conjugated, 5-membered cyclic ligands, in which the two ligands are crosslinked with a germanium-, aluminium-, boron-, phosphorus- or nitrogen-containing hydrocarbon group, such as dimethylgermylenebis(indenyl)titanium dichloride, dimethylgermylene(cyclopentadienyl)(fluorenyl)titanium dichloride, methylalumylenebis(indenyl)titanium dichloride, phenylamylenebis(indenyl)titanium dichloride, phenylphosphylenebis(indenyl)titanium dichloride, ethylborylenebis(indenyl)titanium dichloride, phenylamylenebis(indenyl)titanium dichloride, phenylamylene(cyclopentadienyl)(fluorenyl)titanium dichloride, etc.
   (5) Transition metal compounds having one conjugated, 5-membered cyclic ligand, such as pentamethylcyclopentadienyl-bis(phenyl)aminotitanium dichloride, indenyl-bis(phenyl)aminotitanium dichloride, pentamethylcyclopentadienylbis(trimethylsilyl)aminotitanium dichloride, pentamethylcyclopentadienylphenoxytitanium dichloride, dimethylsilylene(tetramethylcyclopentadienyl)phenylaminotitanium dichloride, dimethylsilylene(tetramethylcyclopentadienyl)-t-butylaminotitanium dichloride, dimethylsilylene(tetrahydroindenyl)decylaminotitanium dichloride, dimethyls ilylene(tetrahydroindenyl)[bis(trimethylsilyl)amino]titanium dichloride, dimethylgermylene(tetramethylcyclopentadienyl)phenylaminotitanium dichloride, pentamethylcyclopentadienyltitanium trimethoxide, pentamethylcyclopentadienyltitanium trichloride, (t-butylamido)(tetramethyl-η⁵-cyclopentadienyl)silane-titaniumdimethyl, (t-butylamido)(tetramethyl-η⁵-cyclopentadienyl)-1,2-ethane-diyltitanium dichloride, (methylamido)(tetramethyl-η⁵-cyclopentadienyl)-1,2-ethane-diyltitanium dichloride, (ethylamido)(tetramethyl-η⁵-cyclopentadienyl)methylenetitanium dichloride, (t-butylamido)dimethyl(tetramethyl-η⁵-cyclopentadienyl)silane-titanium dichloride, (benzylamido)dimethyl-(tetramethyl-η⁵-cyclopentadienyl)silane-titanium dichloride, (phenylphosphido)dimethyl-(tetramethyl-η⁵-cyclopentadienyl)silane-titaniumdibenzyl, etc.
   (6) Transition metal compounds having two conjugated, 5-membered cyclic ligands in which the ligands are double-crosslinked, such as (1,1'-dimethylsilylene)(2,2'-isopropylene)bis(cyclopentadienyl)titanium dichloride, (1,1'-dimethylsilylene)(2,2'-dimethylsilylene)bis(cyclopentadienyl)titanium dichloride, (1,1'-dimethylsilylene)(2,2'-isopropylidene)bis(cyclopentadienyl)dimethyltitanium, (1,1'-dimethylsilylene)(2,2'-isopropylidene)bis(cyclopentadienyl)dibenzyltitanium, (1,1'-dimethylsilylene)(2,2'-isopropylidene)bis(cyclopentadienyl)bis(trimethylsilyl)titanium, (1,1'-dimethylsilylene)(2,2'-isopropylidene)bis(cyclopentadienyl)bis(trimethylsilylmethyl)titanium, (1,2'-dimethylsilylene) (2,1'-ethylene)bis(indenyl)titanium dichloride, (1,1'-dimethylsilylene)(2,2'-ethylene)-bis(indenyl)titanium dichloride, (1,1'-ethylene)(2,2'-dimethylsilylene)bis(indenyl)titanium dichloride, (1,1'-dimethylsilylene)(2,2'-cyclohexylidene)bis(indenyl)titanium dichloride, etc.
   (7) Derivatives from compounds of (1) to (6) noted above, which are produced by substituting the chlorine atoms in those compounds of (1) to (6) with any of a bromine atom, an iodine atom, a hydrogen atom, a methyl group, a phenyl group and others, and by substituting the center metal, titanium in those transition metal compounds with any of zirconium, hafnium, niobium, molybdenum, tungsten and others.
(II) As specific examples of the transition metal compounds of formula (I-4), mentioned are the following compounds.
   They are transition metal compounds of formula (I-4), in which the group (C₅H₅₋ₑR¹¹ₑ) is any of the following formulae (I) to (VII): 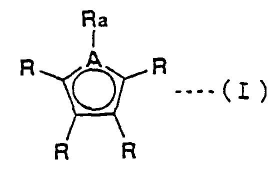 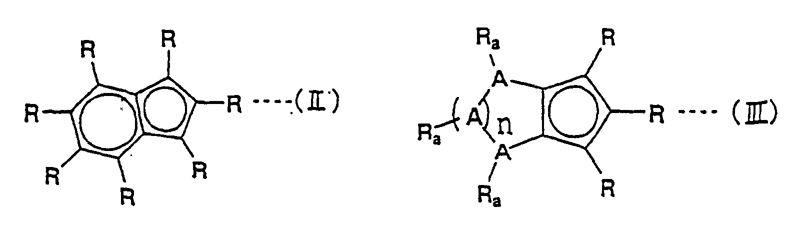 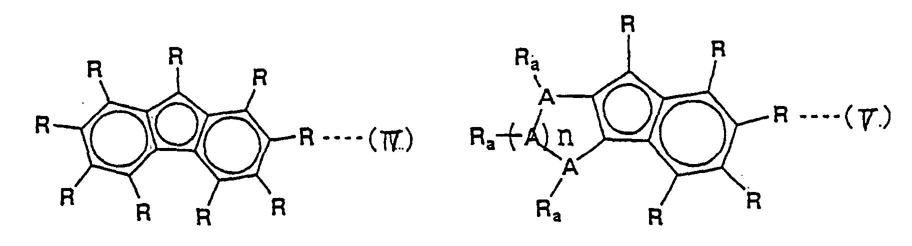 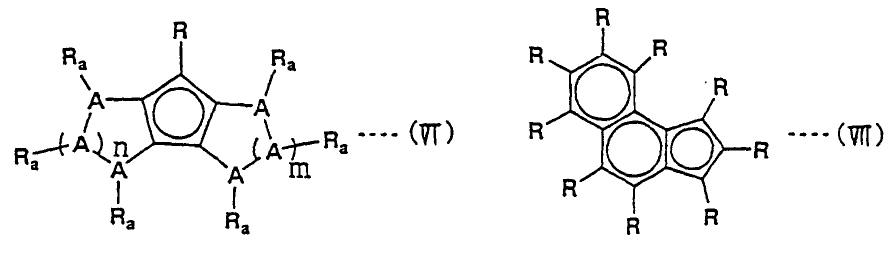 wherein A represents an element of Group 13, 14, 15 or 16, and plural A's may be the same or different; R represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl or akylsilylalkyl group having from 3 to 30 carbon atoms, and R's may be the same or different, and may be optionally bonded to each other to form a cyclic structure; a represents 0, 1 or 2; and n and m each represent an integer of at least 1.
   Specific examples of the group (C₅H₅₋ₑR¹¹ₑ) are mentioned below.
   In the indenyl derivatives and the fluorenyl derivatives, the position of each substituent is indicated by the following position numbers. 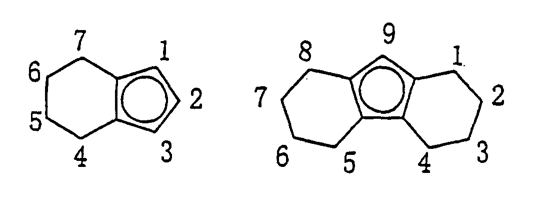
   The group (C₅H₅₋ₑR¹¹ₑ) includes, for example, a cyclopentadienyl group, a methylcyclopentadienyl group, a 1,2-dimethylcyclopentadienyl group, a 1,3-dimethylcyclopentadienyl group, a 1,2,3-trimethylcyclopentadienyl group, a 1,3,4-trimethylcyclopentadienyl group, a tetramethylcyclopentadienyl group, a pentamethylcyclopentadienyl group, an ethylcyclopentadienyl group, a 1,2-diethylcyclopentadienyl group, a 1,3-diethylcyclopentadienyl group, a 1,2,3-triethylcyclopentadienyl group, a 1,3,4-triethylcyclopentadienyl group, a tetraethylcyclopentadienyl group, a pentaethylcyclopentadienyl group, an indenyl group, a 1-methylindenyl group, a 1,2-dimethylindenyl group, a 1,3-dimethylindenyl group, a 1,2,3-trimethylindenyl group, a 2-methylindenyl group, a 1-ethylindenyl group, a 1-ethyl-2-methylindenyl group, a 1-ethyl-3-methylindenyl group, a 1-ethyl-2,3-dimethylindenyl group, a 1,2-diethylindenyl group, a 1,3-diethylindenyl group, a 1,2,3-triethylindenyl group, a 2-ethylindenyl group, a 1-methyl-2-ethylindenyl group, a 1,3-dimethyl-2-ethylindenyl group, a 4,5,6,7-tetrahydroindenyl group, a 1-methyl-4,5,6,7-tetrahydroindenyl group, a 1,2-dimethyl-4,5,6,7-tetrahydroindenyl group, a 1,3-dimethyl-4,5,6,7-tetrahydroindenyl group, a 1,2,3-trimethyl-4,5,6,7-tetrahydroindenyl group, a 2-methyl-4,5,6,7-tetrahydroindenyl group, a 1-ethyl-4,5,6,7-tetrahydroindenyl group, a 1-ethyl-2-methyl-4,5,6,7-tetrahydroindenyl group, a 1-ethyl-3-methyl-4,5,6,7-tetrahydroindenyl group, a 1-ethyl-2,3-dimethyl-4,5,6,7-tetrahydroindenyl group, a 1,2-diethyl-4,5,6,7-tetrahydroindenyl group, a 1,2-diethyl-3-methyl-4,5,6,7-tetrahydroindenyl group, a 1,3-diethyl-4,5,6,7-tetrahydroindenyl group, a 1,3-diethyl-2-methyl4,5,6,7-tetrahydroindenyl group, a 1,2,3-triethyl-4,5,6,7-tetrahydroindenyl group, a 2-ethyl-4,5,6,7-tetrahydroindenyl group, a 1-methyl-2-ethyl-4,5,6,7-tetrahydroindenyl group, a 1,3-dimethyl-2-ethyl-4,5,6,7-tetrahydroindenyl group, a fluorenyl group, a 9-methylfluorenyl group, a 9-ethylfluorenyl group, a 1,2,3,4-tetrahydrofluorenyl group, a 9-methyl-1,2,3,4-tetrahydrofluorenyl group, a 9-ethyl-1,2,3,4-tetrahydrofluorenyl group, a 1,2,3,4,5,6,7,8-octahydrofluorenyl group, a 9-methyl-1,2,3,4,5,6,7,8-octahydrofluorenyl group, a 9-ethyl-1,2,3,4,5,6,7,8-octahydrofluorenyl group, etc.
   Specific examples of the transition metal compounds of formula (I-4) are mentioned below. In these, titanium may be replaced with zirconium, and such zirconium compounds are also referred to herein to the same effect.
   They are cyclopentadienyltitanium trichloride, cyclopentadienyltitaniumtrimethyl, cyclopenadienyltitanium trimethoxide, cyclopentadienyltitaniumtribenzyl, methylcyclopentadienyltitanium trichloride, methylcyclopentadienyltitaniumtrimethyl, methylcyclopentadienyltitanium trimethoxide, methylcyclopentadienyltitaniumtribenzyl, dimethylcyclopentadienyltitanium trichloride, dimethylcyclopentadienyltitaniumtrimethyl, dimethylcyclopentadienyltitanium trimethoxide, dimethylcyclopentadienyltitaniumtribenzyl, trimethylcyclopentadienyltitanium trichloride, trimethylcyclopentadienyltitaniumtrimethyl, trimethylcyclopentadienyltitanium trimethoxide, trimethylcyclopentadienyltitaniumtribenzyl, tetramethylcyclopentadienyltitanium trichloride, tetramethylcyclopentadienyltitaniumtrimethyl, tetramethylcyclopentadienyltitanium trimethoxide, tetramethylcyclopentadienyltitaniumtribenzyl, pentamethylcyclopentadienyltitanium trichloride, pentamethylcyclopentadienyltitaniumtrimethyl, pentamethylcyclopentadienyltitanium trimethoxide, pentamethylcyclopentadienyltitaniumtribenzyl, indenyltitanium trichloride, indenyltitaniumtrimethyl, indenyltitanium trimethoxide, indenyltitaniumtribenzyl, 1-methylindenyltitanium trichloride, 1-methylindenyltitaniumtrimethyl, 1-methylindenyltitanium trimethoxide, 1-methylindenyltitaniumtribenzyl, 2-methylindenyltitanium trichloride, 2-methylindenyltitaniumtrimethyl, 2-methylindenyltitanium trimethoxide, 1-methylindenyltitaniumtribenzyl, 1,2-dimethylindenyltitanium trichloride, 1,2-dimethylindenyltitaniumtrimethyl, 1,2-dimethylindenyltitanium trimethoxide, 1,2-dimethylindenyltitaniumtribenzyl, 1,3-dimethylindenyltitanium trichloride, 1,3-dimethylindenyltitaniumtrimethyl, 1,3-dimethylindenyltitanium trimethoxide, 1,3-dimethylindenyltitaniumtribenzyl, 1,2,3-trimethylindenyltitanium trichloride, 1,2,3-trimethylindenyltitaniumtrimethyl, 1,2,3-trimethylindenyltitanium trimethoxide, 1,2,3-trimethylindenyltitaniumtribenzyl, 1,2,3,4,5,6,7-heptamethylindenyltitanium trichloride, 1,2,3,4,5,6,7-heptamethylindenyltitaniumtrimethyl, 1,2,3,4,5,6,7-heptamethylindenyltitanium trimethoxide, 1,2,3,4,5,6,7-heptamethylindenyltitaniumtribenzyl, 4,5,6,7-tetrahydroindenyltitanium trichloride, 4,5,6,7-tetrahydroindenyltitaniumtrimethyl, 4,5,6,7-tetrahydroindenyltitanium trimethoxide, 4,5,6,7-tetrahydroindenyltitaniumtribenzyl, 1-methyl-4,5,6,7-tetrahydroindenyltitanium trichloride, 1-methyl-4,5,6,7-tetrahydroindenyltitaniumtrimethyl, 1-methyl-4,5,6,7-tetrahydroindenyltitanium trimethoxide, 1-methyl-4,5,6,7-tetrahydroindenyltitaniumtribenzyl, 2-methyl-4,5,6,7-tetrahydroindenyltitanium trichloride, 2-methyl-4,5,6,7-tetrahydroindenyltitanium trimethoxide, 2-methyl-4,5,6,7-tetrahydroindenyltitaniumtribenzyl, 1,2-dimethyl-4,5,6,7-tetrahydroindenyltitanium trichloride, 1,2-dimethyl-4,5,6,7-tetrahydroindenyltitaniumtrimethyl, 1,2-dimethyl-4,5,6,7-tetrahydroindenyltitanium trimethoxide, 1,2-dimethyl-4,5,6,7-tetrahydroindenyltitaniumtribenzyl, 1,3-dimethyl-4,5,6,7-tetrahydroindenyltitanium trichloride, 1,3-dimethyl-4,5,6,7-tetrahydroindenyltitaniumtrimethyl, 1,3-dimethyl-4,5,6,7-tetrahydroindenyltitanium trimethoxide, 1,3-dimethyl-4,5,6,7-tetrahydroindenyltitaniumtribenzyl, 1,2,3-trimethyl-4,5,6,7-tetrahydroindenyltitanium trichloride, 1,2,3-trimethyl-4,5,6,7-tetrahydroindenyltitaniumtrimethyl, 1,2,3-trimethyl-4,5,6,7-tetrahydroindenyltitanium trimethoxide, 1,2,3-trimethyl-4,5,6,7-tetrahydroindenyltitaniumtribenzyl, 1-ethyl-4,5,6,7-tetrahydroindenyltitanium trichloride, 1-ethyl-4,5,6,7-tetrahydroindenyltitaniumtrimethyl, 1-ethyl-4,5,6,7-tetrahydroindenyltitanium trimethoxide, 1-ethyl-4,5,6,7-tetrahydroindenyltitaniumtribenzyl, 1-ethyl-2-methyl-4,5,6,7-tetrahydroindenyltitanium trichloride, 1-ethyl-2-methyl-4,5,6,7-tetrahydroindenyltitaniumtrimethyl, 1-ethyl-2-methyl-4,5,6,7-tetrahydroindenyltitanium trimethoxide, 1-ethyl-2-methyl-4,5,6,7-tetrahydroindenyltitaniumtribenzyl, 1-ethyl-3-methyl-4,5,6,7-tetrahydroindenyltitanium trichloride, 1-ethyl-3-methyl-4,5,6,7-tetrahydroindenyltitanium trichloride, 1-ethyl-3-methyl-4,5,6,7-tetrahydroindenyltitaniumtrimethyl, 1-ethyl-3-methyl-4,5,6,7-tetrahydroindenyltitanium trimethoxide, 1-ethyl-3-methyl-4,5,6,7-tetrahydroindenyltitaniumtribenzyl, 1-ethyl-2,3-dimethyl-4,5,6,7-tetrahydroindenyltitanium trichloride, 1-ethyl-2,3-dimethyl-4,5,6,7-tetrahydroindenyltitaniumtrimethyl, 1-ethyl-2,3-dimethyl-4,5,6,7-tetrahydroindenyltitanium trimethoxide, 1-ethyl-2,3-dimethyl-4,5,6,7-tetrahydroindenyltitaniumtribenzyl, 1,2-diethyl-4,5,6,7-tetrahydroindenyltitanium trichloride, 1,2-diethyl-4,5,6,7-tetrahydroindenyltitaniumtrimethyl, 1,2-diethyl-4,5,6,7-tetrahydroindenyltitanium trimethoxide, 1,2-diethyl-4,5,6,7-tetrahydroindenyltitaniumtribenzyl, 1,2-diethyl-3-methyl-4,5,6,7-tetrahydroindenyltitanium trichloride, 1,2-diethyl-3-methyl-4,5,6,7-tetrahydroindenyltitaniumtrimethyl, 1,2-diethyl-3-methyl-4,5,6,7-tetrahydroindenyltitanium trimethoxide, 1,2-diethyl-3-methyl-4,5,6,7-tetrahydroindenyltitaniumtribenzyl, 1,3-diethyl-4,5,6,7-tetrahydroindenyltitanium trichloride, 1,3-diethyl-4,5,6,7-tetrahydroindenyltitaniumtrimethyl, 1,3-diethyl-4,5,6,7-tetrahydroindenyltitanium trimethoxide, 1,3-diethyl-4,5,6,7-tetrahydroindenyltitaniumtribenzyl, 1,3-diethyl-2-methyl-4,5,6,7-tetrahydroindenyltitanium trichloride, 1,3-diethyl-2-methyl-4,5,6,7-tetrahydroindenyltitaniumtrimethyl, 1,3-diethyl-2-methyl-4,5,6,7-tetrahydroindenyltitanium trimethoxide, 1,3-diethyl-2-methyl-4,5,6,7-tetrahydroindenyltitaniumtribenzyl, 1,2,3-triethyl-4,5,6,7-tetrahydroindenyltitanium trichloride, 1,2,3-triethyl-4,5,6,7-tetrahydroindenyltitaniumtrimethyl, 1,2,3-triethyl-4,5,6,7-tetrahydroindenyltitanium trimethoxide, 1,2,3-triethyl-4,5,6,7-tetrahydroindenyltitaniumtribenzyl, 2-ethyl-4,5,6,7-tetrahydroindenyltitanium trichloride, 2-ethyl-4,5,6,7-tetrahydroindenyltitaniumtrimethyl, 2-ethyl-4,5,6,7-tetrahydroindenyltitanium trimethoxide, 2-ethyl-4,5,6,7-tetrahydroindenyltitaniumtribenzyl, 1-methyl-2-ethyl-4,5,6,7-tetrahydroindenyltitanium trichloride, 1-methyl-2-ethyl-4,5,6,7-tetrahydroindenyltitaniumtrimethyl, 1-methyl-2-ethyl-4,5,6,7-tetrahydroindenyltitanium trimethoxide, 1-methyl-2-ethyl-4,5,6,7-tetrahydroindenyltitaniumtribenzyl, 1,3-dimethyl-2-ethyl-4,5,6,7-tetrahydroindenyltitanium trichloride, 1,3-dimethyl-2-ethyl-4,5,6,7-tetrahydroindenyltitaniumtrimethyl, 1,3-dimethyl-2-ethyl-4,5,6,7-tetrahydroindenyltitanium trimethoxide, 1,3-dimethyl-2-ethyl-4,5,6,7-tetrahydroindenyltitaniumtribenzyl, 1,2,3,4-tetrahydrofluorenyltitanium trichloride, 1,2,3,4-tetrahydrofluorenyltitaniumtrimethyl, 1,2,3,4-tetrahydrofluorenyltitanium trimethoxide, 1,2,3,4-tetrahydrofluorenyltitaniumtribenzyl, 9-methyl-1,2,3,4-tetrahydrofluorenyltitanium trichloride, 9-methyl-1,2,3,4-tetrahydrofluorenyltitaniumtrimethyl, 9-methyl-1,2,3,4-tetrahydrofluorenyltitanium trimethoxide, 9-methyl-1,2,3,4-tetrahydrofluorenyltitaniumtribenzyl, 9-ethyl-1,2,3,4-tetrahydrofluorenyltitanium trichloride, 9-ethyl1,2,3,4-tetrahydrofluorenyltitaniumtrimethyl, 9-ethyl-1,2,3,4-tetrahydrofluorenyltitanium trimethoxide, 9-ethyl-1,2,3,4-tetrahydrofluorenyltitaniumtribenzyl, 1,2,3,4,5,6,7,8-octahydrofluorenyltitanium trichloride, 1,2,3,4,5,6,7,8-octahydrofluorenyltitaniumtrimethyl, 1,2,3,4,5,6,7,8-octahydrofluorenyltitanium trimethoxide, 1,2,3,4,5,6,7,8-octahydrofluorenyltitaniumtribenzyl, 9-methyl-1,2,3,4,5,6,7,8-octahydrofluorenyltitanium trichloride, 9-methyl-1,2,3,4,5,6,7,8-octahydrofluorenyltitaniumtrimethyl, 9-methyl-1,2,3,4,5,6,7,8-octahydrofluorenyltitanium trimethoxide, 9-ethyl-1,2,3,4,5,6,7,8-octahydrofluorenyltitanium trichloride, 9-ethyl-1,2,3,4,5,6,7,8-octahydrofluorenyltitaniumtrimethyl, 9-ethyl-1,2,3,4,5,6,7,8-octahydrofluorenyltitanium trimethoxide, 9-ethyl-1,2,3,4,5,6,7,8-octahydrofluorenyltitaniumtribenzyl, etc.; as well as their derivatives to be produced by substituting the titanium element in those compounds with zirconium or hafnium, or with any other element of different Groups, and also their analogues having a transition metal element of lanthanides. However, these are not limitative.
(III) Specific Examples of the transition metal compounds of formula (I-5) include tetramethyltitanium, tetrabenzyltitanium, tetraethyltitanium, tetraphenyltitanium, tetramethoxytitanium, tetraethoxytitanium, tetrephenoxytitanium, tetra(dimethylamino)titanium, tetra(diethylamino)titanium, tetra(diphenylamino)titanium; bis(phenoxy)titanium compounds described in Macromolecules, 1997, 30, 1562-1569, in Journal of Organometallic Chemistry, 514 (1996), 213-217, etc.; diamidotitanium compounds described in Macromolecules, 1996, 29, 5241-5243, in Organometallics, 1997, 16, 1491-1496, etc.; their derivatives to be produced by substituting the titanium element in those compounds with zirconium or hafnium, or with any other element of different Groups, and also their analogues having a transition metal element of lanthanides.
(IV) In the transition metal compounds of formula (I-6), M² represents a transition metal of Groups 8 to 10 of the Periodic Table, concretely including iron, cobalt, nickel, palladium, platinum, etc. Of those, preferred are nickel and palladium. L¹ and L² each represents a coordination-bonding ligand; and X¹ and Y¹ each represent a covalent-bonding or ionic-bonding ligand. As mentioned hereinabove, X¹ and Y¹ include, for example, a hydrogen atom, a halogen atom, a hydrocarbon group having from 1 to 20, preferably from 1 to 10 carbon atoms, an alkoxy group having from 1 to 20, preferably from 1 to 10 carbon atoms, an amino group, a phosphorus-containing hydrocarbon group having from 1 to 20, preferably from 1 to 12 carbon atoms (e.g., a diphenylphosphine group, etc.), a silicon-containing hydrocarbon group having from 1 to 20, preferably from 1 to 12 carbon atoms (e.g., a trimethylsilyl group, etc.), and a boron compound residue having a hydrocarbon group with from 1 to 20, preferably from 1 to 12 carbon atoms or having halogens (e.g., B(C₆H₅)₄, BF₄). Of those, preferred are halogen atoms and hydrocarbon groups. X¹ and Y¹ may be the same or different ones. Specific examples of L¹ and L² include triphenylphosphine, acetonitrile, benzonitrile, 1,2-bisdiphenylphosphinoethane, 1,3-bisdiphenylphosphinopropane, 1,1'-bisdiphenylphosphinoferrocene, cyclooctadiene, pyridine, bistrimethylsilylaminobistrimethylsilyliminophosphorane, etc.

L¹, L², X¹ and Y¹ may be bonded to each other to form a cyclic structure.

The compounds of transition metals of Groups 8 to 10 of the Periodic Table preferably have a diimine compound as the ligand, including, for example, complex compounds of a general formula (I-7): 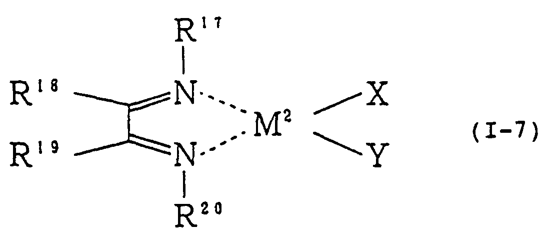 wherein R¹⁷ and R²⁰ each independently represent an aliphatic hydrocarbon group having from 1 to 20 carbon atoms, or an aromatic group having a hydrocarbon group on the ring and having from 7 to 20 carbon atoms in total; R¹⁸ and R¹⁹ each independently represent a hydrogen atom, or a hydrocarbon group having from 1 to 20 carbon atoms, and R¹⁸ and R¹⁹ may be bonded to each other to form a ring; X and Y each independently represent a hydrogen atom, or a hydrocarbon group having from 1 to 20 carbon atoms; and M² represents a transition metal of Groups 8 to 10 of the Periodic Table.

In formula (I-7), the aliphatic hydrocarbon group having from 1 to 20 carbon atoms for R¹⁷ and R²⁰ may be a linear or branched alkyl group having from 1 to 20 carbon atoms or a cycloalkyl group having from 3 to 20 carbon atoms, concretely including a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a tetradecyl group, a hexadecyl group, an octadecyl group, a cyclopentyl group, a cyclohexyl group, and a cyclooctyl group, etc. Into the ring of the cycloalkyl group, a suitable substituent such as a lower alkyl group or the like may be introduced. The aromatic group having a hydrocarbon group on the ring and having from 7 to 20 carbon atoms in total includes, for example, phenyl and naphthyl groups with at least one linear, branched or cyclic C1-10 alkyl group being on the aromatic ring. For R¹⁷ and R²⁰, preferred is an aromatic group having a hydrocarbon group on the ring, and especially preferred is a 2,6-diisopropylphenyl group. R¹⁷ and R²⁰ may be the same or different.

The hydrocarbon group having from 1 to 20 carbon atoms for R¹⁸ and R¹⁹ includes, for example, a linear or branched alkyl group having from 1 to 20 carbon atoms, a cycloalkyl group having from 3 to 20 carbon atoms, an aryl group having from 6 to 20 carbon atoms, and an aralkyl group having from 7 to 20 carbon atoms. For examples of the linear or branched alkyl group having from 1 to 20 carbon atoms and the cycloalkyl group having from 3 to 20 carbon atoms for R¹⁸ and R¹⁹, referred to are those of the C1-20 aliphatic hydrocarbon group mentioned hereinabove for R¹⁷ and R²⁰. The aryl group having from 6 to 20 carbon atoms includes, for example, a phenyl group, a tolyl group, a xylyl group, a naphthyl group, a methylnaphthyl group, etc.; and the aralkyl group having from 7 to 20 carbon atoms includes, for example, a benzyl group, a phenethyl group, etc. R¹⁷ and R¹⁸ may be the same or different, and may be bonded to each other to form a ring.

For examples of the hydrocarbon group having from 1 to 20 carbon atoms for X and Y, referred to are those of the C1-20 hydrocarbon group mentioned hereinabove for R¹⁸ and R¹⁹. For X and Y, especially preferred is a methyl group. X and Y may be the same or different.

The transition metal of Groups 8 to 10 of the Periodic Table for M² includes, for example, nickel, palladium, platinum, iron, cobalt, rhodium, ruthenium, etc. Preferred are nickel and palladium.

Specific examples of the complex compounds of formula (I-7) are compounds of the following formulae [1], [2], [3], [4], [5], [6], [7], [8], [9], [10], [11] and [12].

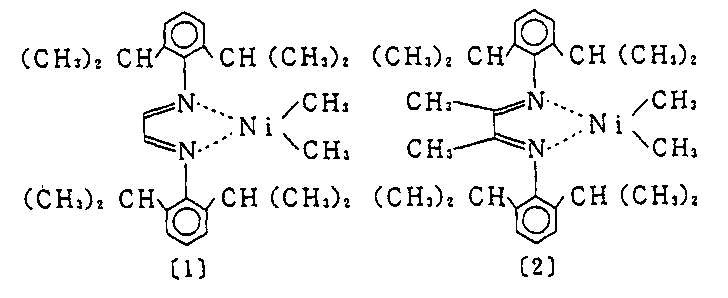

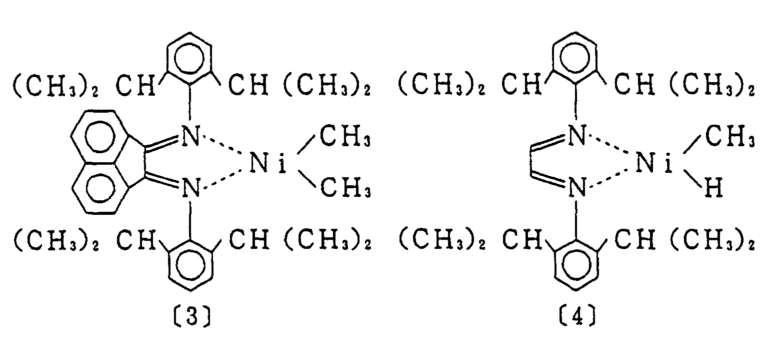

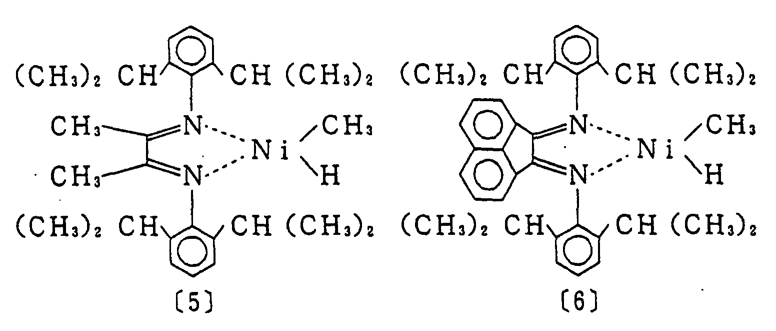

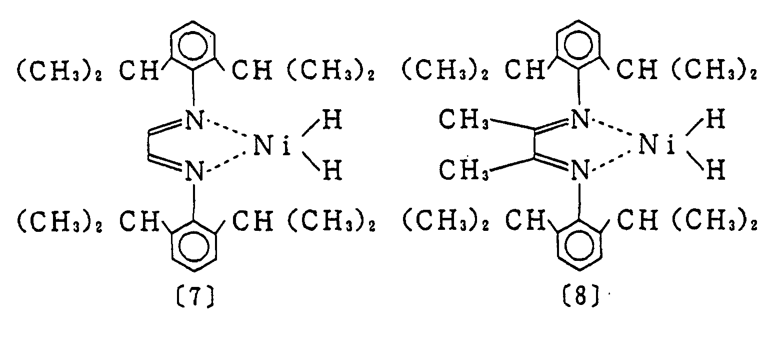

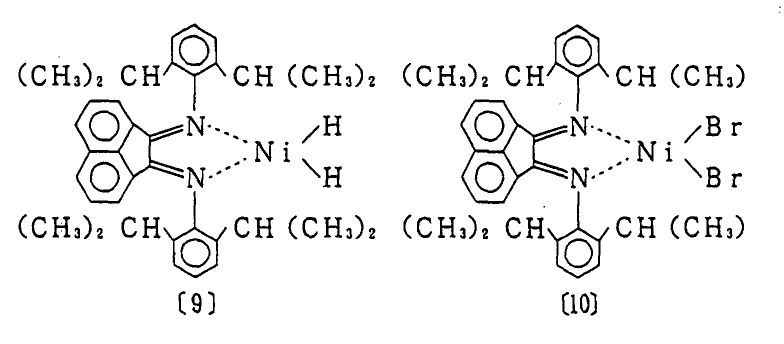

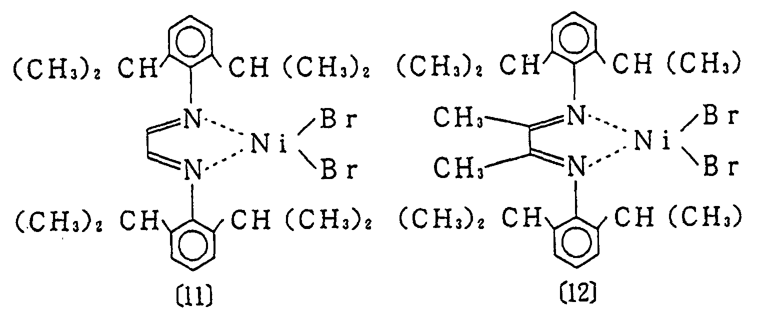

Specific examples of the transition metal compounds of formula (I-7) include dibromobistriphenylphosphine nickel, dichlorobistriphenylphosphine nickel, dibromodiacetonitrile nickel, dibromodibenzonitrile nickel, dibromo(1,2-bisdiphenylphosphinoethane) nickel, dibromo(1,3-bisdiphenylphosphinopropane) nickel, dibromo(1,1'-diphenylbisphosphinoferrocene) nickel, dimethylbisdiphenylphosphine nickel, dimethyl(1,2-bisdiphenylphosphinoethane) nickel, methyl(1,2-bisdiphenylphosphinoethano)nickel tetrafluoroborate, (2-diphenylphosphino-1-phenylethyleneoxy)phenylpyridine nickel, dichlorobistriphenylphosphine palladium, dichlorodibenzonitrile palladium, dichlorodiacetonitrile palladium, dichloro(1,2-bisdiphenylphosphinoethane) palladium, bistriphenylphosphinopalladium bistetrafluoroborate, bis(2,2'-bipyridino)methyliron tetrafluoroborate etherate, etc.

Of those, preferred are cationic complexes such as methyl(1,2-bisdiphenylphosphinoethano)nickel tetrafluoroborate, bistriphenylphosphinopalladium bistetrafluoroborate, and bis(2,2'-bipyridino)methyliron tetrafluoroborate etherate.

In the invention, one or more of the complex compounds noted above may be used either singly or as combined.

### (B) Oxygen-containing compound:

Herein used are oxygen-containing compounds of a general formula (I-8): 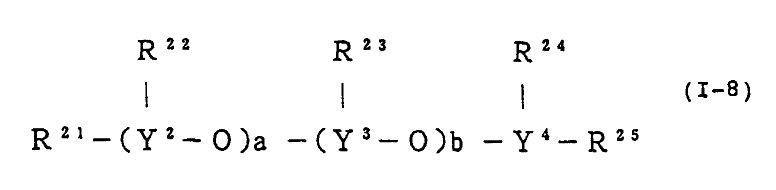 and/or those of a general formula (I-9):

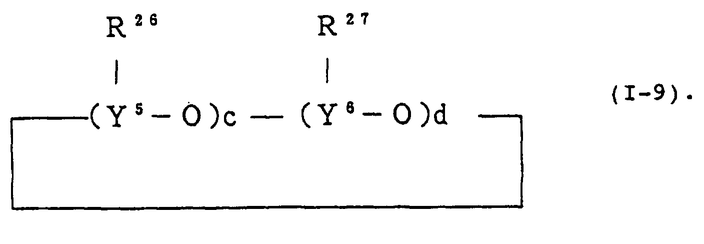

In formulae (I-8) and (I-9), R²¹ to R²⁷ each represent an alkyl group having from 1 to 8 carbon atoms, concretely including a methyl group, an ethyl group, an n-propyl group, an isopropyl group, all types of butyl groups, all types of pentyl groups, all types of hexyl group, all types of heptyl groups, and all types of octyl groups. R²¹ to R²⁷ may be the same or different; and R²⁶ and R²⁷ may be the same or different. Y² to Y⁶ each represent an element of Group 13 of the Periodic Table, concretely including B, Al, Ga, In and T1. Of these, preferred are B and A1. Y² to Y⁴ may be the same or different; and Y⁵ and Y⁶ may be the same or different. a to d each indicates a number of from 0 to 50, but (a + b) and (c + d) each must be at least 1. a to d each preferably falls between 1 and 20, more preferably between 1 and 10, even more preferably between 1 and 5.

As the oxygen-containing compound for the catalyst component, preferred are alkylaluminoxanes. Preferred examples of the compound are methylaluminoxane and isobutylaluminoxane.

### Component (C):

This is a compound of the following general formula (I-1):

((R¹)₃-C-Y)n-Z-(R²)m-n (I-1)

wherein R¹ represents an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R¹'s may be the same or different, and R¹'s may be optionally bonded to each other to form a cyclic structure; Y represents an element of Group 16; Z represents a metal element of Groups 2 to 13; R² represents a hydrocarbon group; m is an integer, indicating the valency of the metal element Z; and n is an integer of from 1 to (m-1),

Especially preferred are the following compounds: (1) Y is oxygen and Z is aluminium; (2) at least one of three R¹'s is an aromatic hydrocarbon group having from 6 to 30 carbon atoms; (3) three R¹'s are all hydrocarbon groups each having at least one carbon atom; (4) three R¹'s are all hydrocarbon groups each having from 4 to 30 carbon atoms; (5) three R¹'s are all aromatic hydrocarbon groups each having from 6 to 30 carbon atoms, preferably phenyl groups; (6) R² is an alkyl group having at least 2 carbon atoms.

Concretely, more preferred those where R¹'s are all phenyl groups, Y is oxygen, Z is aluminium, n = 1, and R² is an isobutyl group.

The compounds for the component (C) are not specifically defined for their production method, so far as they have the structure of the formula mentioned above, but preferred are those produced by reacting <1> a compound of a general formula, (R¹)₃-C-OR³ or <1> at least one selected from compounds of a general formula, (R¹)₃-C-OR³, R⁴-CO-R⁵ or R⁶-CO-OR⁷, with <2> a compound of a general formula, Z(R²)m. (In these formulae, R¹ represents an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R¹'s may be the same or different, and R¹'s may be optionally bonded to each other to form a cyclic structure; R³, R⁴, R⁵, R⁶ and R⁷ each represent a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, and R³, R⁴, R⁵, R⁶ and R⁷ may be the same or different; Z represents a metal element of Groups 2 to 13; m is an integer, indicating the valency of the metal element Z; and R² represents a hydrocarbon group.

Concretely, they are reaction products of at least one selected from alcohols, ethers, aldehydes, ketones, carboxylic acids and carboxylates, with an aluminium compound. Preferred are reaction products of alcohols with an aluminium compound. For these, preferred are the following: (1) at least one of three R¹'s for (R¹)₃ is an aromatic hydrocarbon group having from 6 to 30 carbon atoms; (2) three R¹'s for (R¹)₃ are all hydrocarbon groups each having at least one carbon atom; (3) three R¹'s for (R¹)₃ are all hydrocarbon groups each having from 4 to 30 carbon atoms; (4) three R¹'s for (R¹)₃ are all aromatic hydrocarbon groups each having from 6 to 30 carbon atoms, preferably phenyl groups; (5) R² is an alkyl group having at least 2 carbon atoms. Concretely, more preferred are those where R¹'s are all phenyl groups, and R² is an isobutyl group. Most preferred is a reaction product of triphenylmethyl alcohol with triisobutylaluminium.

The reaction condition for the compound <1> and the compound <2> is not specifically defined, but is preferably as follows: They are blended in a ratio by mol, compound <1>/compound <2> falling between 1/0.1 and 1/10, more preferably between 1/0.5 and 1/2, even more preferably between 1/0.8 and 1/1.2. The reaction temperature falls between - 80°C and 300°C, more preferably between -10°C and 50°C. The solvent for the reaction is not also specifically defined, but preferred are toluene, ethylbenzene and the like.

In place of using the compound of the above-mentioned general formula as the component (C), a compound of the following (C1) and a compound of the following (C2) may be directly added to the site of catalyst production or to the site of polymerization to form the component (C) in situ. In this case, the catalyst components are the transition metal compound (A), the oxygen-containing compound (B), the compounds (C1) and (C2), and optionally an alkylating agent (D).

(C1) is a compound of a general formula, (R¹)₃-C-OR³, or at least one selected from compounds of a general formula, (R¹)₃-C-OR³, R⁴-CO-R⁵ or R⁶-CO-OR⁷; and (C2) is a compound of a general formula, Z(R²)m.

In these formulae, R¹ represents an aromatic hydrocarbon group having from 6 to 30 carbon atoms, an alkoxy group having from, 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R¹'s may be the same or different, and R¹'s may be optionally bonded to each other to form a cyclic structure; R³, R⁴, R⁵, R⁶ and R⁷ each represent a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, and R³, R⁴, R⁵, R⁶ and R⁷ may be the same or different; Z represents a metal element of Groups 2 to 13; m is an integer, indicating the valency of the metal element Z; and R² represents a hydrocarbon group.

Concretely, (C1) is at least one selected from alcohols, ethers, aldehydes, ketones, carboxylic acids and carboxylates, preferably from alcohols; and (C2) is an aluminium compound. For these, preferred are the following: (1) at least one of three R¹'s for (R¹)₃ is an aromatic hydrocarbon group having from 6 to 30 carbon atoms; (2) three R¹'s for (R¹)₃ are all hydrocarbon groups each having at least one carbon atom; (3) three R¹'s for (R¹)₃ are all hydrocarbon groups each having from 4 to 30 carbon atoms; (4) three R¹'s for (R¹)₃ are all aromatic hydrocarbon groups each having from 6 to 30 carbon atoms, preferably phenyl groups; (5) R² is an alkyl group having at least 2 carbon atoms. More concretely, the most preferred combination is (C1) of triphenylmethyl alcohol and (C2) of triisobutylaluminium.

### (D) Alkylating agent:

The catalyst of the invention for production of olefinic polymers optionally contains an alkylating agent. Various types of alkylating agents are known and are usable in the invention, including, for example, alkyl group-having aluminium compounds of a general formula (I-12):

R²⁸ ₘAl(OR²⁹)ₙX₃₋ₘ₋ₙ (I-12)

wherein R²⁸ and R²⁹ each represent an alkyl group having from 1 to 8, preferably from 1 to 4 carbon atoms; X represents a hydrogen atom or a halogen atom; 0 < m ≤ 3, but preferably m is 2 or 3, most preferably 3; 0 ≤ n < 3, but preferably n is 0 or 1; alkyl group-having magnesium compounds of a general formula (I-13):

R²⁸ ₂Mg (I-13)

wherein R²⁸ has the same meaning as above; and alkyl group-having zinc compounds of a general formula (I-14):

R²⁸ ₂Zn (I-14)

wherein R²⁸ has the same meaning as above.

Of these alkyl group-having compounds, preferred are alkyl group-having aluminium compounds; and more preferred are trialkylaluminium compound and dialkylaluminium compounds. Concretely, they include trialkylaluminiums such as trimethylaluminium, triethylaluminium, tri-n-propylaluminium, triisopropylaluminium, tri-n-butylaluminium, triisobutylaluminium, tri-t-butylaluminium, etc.; dialkylaluminium halides such as dimethylaluminium chloride, diethylaluminium chloride, di-n-propylaluminium chloride, diisopropylaluminium chloride, di-n-butylaluminium chloride, diisobutylaluminium chloride, di-t-butylaluminium chloride, etc.; dialkylaluminium alkoxides such as dimethylaluminium methoxide, dimethylaluminium ethoxide, etc.; dialkylaluminium hydrides such as dimethylaluminium hydride, diethylaluminium hydride, diisobutylaluminium hydride, etc. Further mentioned are dialkylmagnesiums such as dimethylmagnesium, diethylmagnesium, di-n-propylmagnesium, diisopropylmagnesium, etc.; dialkylzincs such as dimethylzinc, diethylzinc, di-n-propylethylzinc, diisopropylzinc, etc.

### 2. Method for producing catalyst:

### (1) Order of contacting constituent components:

To produce the catalyst of the invention, the order of contacting the constituent components with each other is not specifically defined. For example, the components may be contacted with each other in the following manner.
(i) For producing the catalyst comprising the component (A), the component (B) and the component (C), for example, employable is <1> a method of first contacting the component (A) with the component (B), followed by further contacting it with the component (C); <2> a method of first contacting the component (A) with the component (C) followed by further contacting it with the component (B); <3> a method of first contacting the component (B) with the component (C) followed by further contacting it with the component (A); or <4> a method of contacting the three components all together.

When the catalyst contains the optional component (D), the order of contacting the component (D) with the other components is not specifically defined. For example, in the process of producing the catalyst, the component (A) may be contacted with the component (D); or the component (B) may be contacted with the component (D); or the component (C) may be contacted with the component (D). As the case may be, the components (A), (B) and (D) are first contacted all together with each other and then with the component (C). (ii) For producing the catalyst comprising the component (A), the component (B), the component (C1) and the component (C2), the order of contacting these components with each other is not also specifically defined, like in the case (i). Preferably, however, the component (C1) and the component (C2) are first contacted with each other prior to being contacted with the other components. The same as in the case (i) shall apply also to the case (ii) of producing the catalyst containing the optional component (D).

### (2) Blend ratio of constituent components:

<1> Regarding the ratio by mol of the component (A) to the component (B), referred to is a case where an organoaluminium compound is used as the oxygen-containing compound of the component (B). In that case, the molar ratio of the component (A) to the component (B) may fall between 1/1 and 1/10,000, but preferably between 1/10 and 1/1,000, in terms of the molar ratio to the aluminium atom in (B).
<2> Regarding the ratio by mol of the component (A) to the component (C), referred to is a case where an aluminium compound is used as the component (C). In that case, the molar ratio of the component (A) to the component (C) may fall between 1/0.5 and 1/1,000, but preferably between 1/0.8 and 1/100, more preferably between 1/1 and 1/100, in terms of the molar ratio to the aluminium atom in (C). Regarding the ratio by mol of the component (A) to the component (D), referred to is a case where an aluminium compound is used as the component (D). In that case, the molar ratio of the component (A) to the component (D) may fall between 1/0.5 and 1/1,000, but preferably between 1/1 and 1/100, in terms of the molar ratio to the aluminium atom in (D).
<3> Where the catalyst contains a combination of the component (C1) and the component (C2), but not the component (C), the molar ratio of (C1) to (C2) may fall between 1/0.1 and 1/50, precisely between 1/0.1 and 1/10, or between 1/0.5 and 1/20, or between 1/0.8 and 1/10, or between 1/0.5 and 1/2, or between 1/0.8 and 1/1.2, but most preferably between 1/0.8 and 1/10.

Regarding the ratio by mol of the component (A) to the component (C2), referred to is a case where an aluminium compound is used as the component (C2). In that case, the molar ratio of the component (A) to the component (C2) may fall between 1/0.5 and 1/1,000, but preferably between 1/1 and 1/100, in terms of the molar ratio to the aluminium atom in (C2). Regarding the blend ratio of the component (D), the same as in the case <2> shall apply also to the case <3>.

### (3) Condition for contacting constituent components:

To produce the catalyst, the constituent components may be contacted with each other in an inert atmosphere of nitrogen or the like, at a temperature not higher than the temperature at which the catalyst is used for polymerization. As the case may be, they may be contacted with each other at a temperature falling between -30 and 200°C.
(4) In the invention, the components constituting the catalyst, especially the component (B) may be carried on a suitable carrier. Any types of carriers are usable with no specific limitation, but preferred are inorganic carriers such as inorganic oxides, etc. Concretely, the inorganic oxides include SiO₂, Al₂O₃, TiO₂, Fe₂O₃, B₂O₃, CaO, ZnO, BaO, ThO₂, silica-alumina, zeolite, ferrite, glass fibers, etc. Of those, especially preferred are SiO₂ and Al₂O₃. The inorganic oxide carriers may contain a small amount of carbonates, nitrates, sulfates, etc. For their properties, the carriers are not specifically defined. Generally, the carriers have a mean particle size of from 1 to 300 µm, but preferably from 10 to 200 µm, more preferably from 20 to 100 µm.

### II. Method for producing olefinic polymers:

### 1. Monomers to be polymerized:

In the method of the invention for producing olefinic polymers, used is the above-mentioned catalyst for polymerization of olefins. The catalyst is favorable to homopolymerization of olefins and to copolymerization of olefins with other olefins (that is, copolymerization of different types of olefins).

Olefins for the method are not specifically defined, but preferred are α-olefins having from 2 to 20 carbon atoms. Especially preferred are ethylene and propylene.

They include α-olefins such as ethylene, propylene, 1-butene, 3-methyl-1-butene, 4-methyl-1-butene, 4-phenyl-1-butene, 1-pentene, 3-methyl-1-pentene, 4-methyl-1-pentene, 3,3-dimethyl-1-pentene, 3,4-dimethyl-1-pentene, 4,4-dimethyl-1-pentene, 1-hexene, 4-methyl-1-hexene, 5-methyl-1-hexene, 6-phenyl-1-hexene, 1-octene, 1-decene, 1-dodecene, 1-tetradecene, 1-hexadecene, 1-octadecene, 1-eicosene, vinylcyclohexane, etc.; halogen-substituted α-olefins such as hexafluoropropene, tetrafluoroethylene, 2-fluoropropene, fluoroethylene, 1,1-difluoroethylene, 3-fluoropropene, trifluoroethylene, 3,4-dichloro-1-butene, etc.; and cyclic olefins such as cyclopentene, cyclohexene, norbornene, 5-methylnorbornene, 5-ethylnorbornene, 5-propylnorbornene, 5,6-dimethylnorbornene, 5-benzylnorbornene, etc.

In the invention, one or more olefins such as those mentioned above may be (co)polymerized in any desired combination.

### 2. Polymerization condition:

In the invention, the polymerization catalyst may be subjected to pre-polymerization. For pre-polymerization, a small amount of olefins may be contacted with the catalyst, for which the method is not specifically defined but may be any ordinary one. Olefins for pre-polymerization are not also specifically defined, and may be any of those mentioned above. The pre-polymerization temperature may fall generally between -20 and 200°C, but preferably between -1°C and 130°C. As the solvent for pre-polymerization, usable are inactive hydrocarbons, aliphatic hydrocarbons, aromatic hydrocarbons, monomers, etc.

The method for polymerizing olefins is not specifically defined and may be any ordinary one including, for example, slurry polymerization, solution polymerization, vapor-phase polymerization, bulk polymerization, suspension polymerization, etc. In the method, the order of contacting the catalyst components with monomers is not also specifically defined. One embodiment comprises contacting the catalyst components with each other to prepare a catalyst in advance in the manner mentioned above, followed by applying monomers to the catalyst batch. Another comprises putting the catalyst components and monomers into a polymerization reactor in any desired order. Preferably, the components except the component (C) or except the components (C1) and (C2), or that is, the components (A), (B) and (D) are blended in a reactor, while, on the other hand, monomers are blended with the component (C) or with the components (C1) and (C2) in a different reactor, and the two blends in different reactors are mixed just before the start of polymerization of the monomers. Having been thus blended, the monomers begin to polymerize in the presence of the catalyst formed in situ.

For the polymerization, a solvent may be used. The solvent includes hydrocarbons and halogenohydrocarbons such as benzene, toluene, xylene, n-hexane, n-heptane, cyclohexane, methylene chloride, chloroform, 1,2-dichloroethane, chlorobenzene, etc. One or more of these compounds may be used either singly or as combined for the solvent. Depending on their type, the monomers to be polymerized could serve as a polymerization solvent.

The amount of the catalyst to be used for the polymerization is preferably so controlled that the component (A) may fall generally between 0.1 and 100 µmols, but preferably between 0.5 and 25 µmols, in one liter of the solvent, in view of the polymerization activity and the reactor efficiency.

Regarding the polymerization condition, the pressure may fall generally between normal pressure and 2000 kg/cm²G. (196 MPaG). The reaction temperature may fall generally between -50 and 250°C. For controlling the molecular weight of the polymer to be produced, the type and the amount of the catalyst components to be used and the polymerization temperature shall be suitably controlled, or hydrogen may be introduced into the polymerization system.

The invention is described in more detail with reference to the following Examples, which, however, are not intended to restrict the scope of the invention.

The stereospecificity [mmmm] of the polymer produced was determined as follows: A sample of the polymer was dissolved in a mixed solvent of 1,2,4-trichlorobenzene and heavy benzene (90/10, by volume), and subjected to a proton complete decoupling method for ¹³C-NMR (using JEOL' LA-500) at 130°C. Based on the signals for the methyl group obtained in the method, the stereospecificity [mmmm] of the sample was determined. The stereospecificity was proposed by A. Zambelli et al. in *Macromolecules*, 6, 925 (1973), and it indicates the isotactic fraction [mmmm] in the pentad units of a polypropylene molecular chain as measured in ¹³C nuclear magnetic resonance spectrometry. For the attribution of the peaks seen in the ¹³C nuclear magnetic resonance spectrometry, referred to was the A. Zambelli et al's proposal in *Macromolecules,* 8, 687 (1975).

The molecular weight (Mw) of the polymer produced and the molecular weight distribution (Mw/Mn) thereof were measured through GPC.

### [Example I-1]

### (1) Preparation of component (C):

0.875 ml of 2 M triisobutylaluminium was added to a toluene solution of 455 mg (1.75 mmols) of triphenylmethanol at -78°C, and stirred at room temperature for 24 hours. The concentration of the component (C) thus formed was 0.1 mols/liter.

Through ¹H-NMR, the product was confirmed to have the component (C) formed therein.

### (2) Preparation of silica-carried methylaluminoxane:

27.1 g of SiO₂ (Fuji Silicia's P-10) was put into a 500 ml Schlenk, and dried at 200°C under pressure for 4 hours. The baked SiO₂ weighed 25.9 g. The baked SiO₂ was put into 400 ml of toluene cooled at -78°C in a dry ice/methanol bath, and stirred. With stirring, 145.5 ml of a solution of methylaluminoxane/toluene (1.5 mols/liter) was dropwise added to the resulting suspension, which took 1 hour to the end. After left as such for 4 hours, this was heated from -78°C up to 20°C over a period of 6 hours, and then further left as it was for 4 hour. Next, this was heated from 20°C up to 80°C over a period of 1 hour, and then left at 80°C for 4 hours. Through the process, the reaction between silica and methylaluminoxane was completed. The resulting suspension was filtered at 60°C, and the solid residue was washed twice with 400 ml of toluene at 60°C. The thus-washed solid was dried at 60°C under reduced pressure for 4 hours, whereby was obtained 33.69 g of silica-carried methylaluminoxane in which the proportion of methylaluminoxane was 23.12 % by weight. N-heptane was added to all the silica-carried methylaluminoxane to be 500 ml in total. The suspension thus prepared had a methylaluminoxane concentration of 0.27 mols/liter.

### (3) Polymerization of propylene:

400 ml of heptane was put into a one-liter stainless autoclave, to which were added 0.5 mmols of triisobutylaluminium, 50 µmols of the solution of the component (C) prepared in the step (1), 0.25 mmols, in terms of aluminium atom, of the silica-carried methylaluminoxane prepared in the step (2), and 1 µmol of dimethylsilylenebis(2-methyl-4,5-benzoindenyl)zirconium dichloride after having been pre-contacted with each other in toluene for 5 minutes to form a catalyst. Propylene gas was introduced into the autoclave to have a total pressure of 0.785 MPaG (8.0 kg/cm²G). During its polymerization, propylene was continuously introduced into the autoclave via a pressure controlling unit so as to have all the time a constant pressure. In that condition, propylene was polymerized at 70°C for 60 minutes. The resulting product was dried, under reduced pressure. Thus obtained, the propylene polymer weighed 33.2 g. Its limiting viscosity (at 135°C in tetralin), [η], was 1.2; its weight-average molecular weight (Mw) was 1,070,000; its molecular weight distribution (Mw/Mn) was 2.07; and its stereospecificity was 97.2 %.

### [Comparative Example I-1]

### (1) Blending of component of catalyst for polymer production:

This is the same as in Example I-1 (2).

### (2) Polymerization of olefin:

This is the same as in Example I-1, except for the step of Example I-1 (3). In this, the component (C) prepared in Example I-1 (1) was not added to the polymerization system.

Thus obtained, the propylene polymer weighed 16.0 g. Its limiting viscosity (at 135°C in tetralin), [η], was 1.3; its weight-average molecular weight (Mw) was 1,100,000; its molecular weight distribution (Mw/Mn) was 2.04; and its stereospecificity was 96.8 %.

### [Example I-2]

### (1) Preparation of component (C):

0.875 ml of 2 M triisobutylaluminium was added to a toluene solution of 1.75 mmols of tricyclohexylmethanol (from Across) at -78°C, and stirred at room temperature for 24 hours. The concentration of the component (C) thus formed was 0.1 mols/liter.

Through ¹H-NMR, the product was confirmed to have the component (C) formed therein.

### (2) Polymerization of propylene:

400 ml of heptane was put into a one-liter stainless autoclave, to which were added 0.5 mmols of triisobutylaluminium, 50 µmols of the solution of the component (C) prepared in the step (1), 0.25 mmols, in terms of aluminium atom, of the silica-carried methylaluminoxane prepared in the step of Example I-1 (2), and 1 µmol of dimethylsilylenebis(2-methyl-4,5-benzoindenyl)zirconium dichloride after having been pre-contacted with each other in toluene for 5 minutes to form a catalyst. Propylene gas was introduced into the autoclave to have a total pressure of 0.785 MPaG (8.0 kg/cm²G). During its polymerization, propylene was continuously introduced into the autoclave via a pressure controlling unit so as to have all the time a constant pressure. In that condition, propylene was polymerized at 70°C for 60 minutes. The resulting product was dried under reduced pressure. Thus obtained, the propylene polymer weighed 28.4 g. Its weight-average molecular weight (Mw) was 1,190,000; its molecular weight distribution (Mw/Mn) was 2.04; and its stereospecificity was 97.1 %.

### [Example I-3]

### (1) Polymerization of ethylene-1-octene:

360 ml of toluene, 40 ml of 1-octene, 0.5 ml of a toluene solution of 1 M triisobutylaluminium, 50 µmols of the solution of the component (C) prepared in the step of Example I-1 (1), and 0.25 mmols, in terms of aluminium atom, of the silica-carried methylaluminoxane prepared in the step of Example I-1 (2) were put into a 1.6-liter stainless autoclave equipped with a catalyst feeder tube, in that order, and heated up to 70°C. Next, ethylene was introduced into the autoclave to have a pressure of 0.785 MPaG (8.0 kg/cm²G). Next, 1.0 µmol of (t-butylamido)dimethyl(tetramethyl-η⁵-cyclopentadienyl)silane-titanium dichloride dissolved in 20 ml of toluene was put into the autoclave via the catalyst feeder tube.

Ethylene was continuously introduced into the autoclave so as to have all the time the constant pressure of 0.785 MPaG (8.0 kg/cm²G), and polymerized for 60 minutes. Next, methanol was added to this to stop the polymerization. A large amount of methanol was added to this, and the polymer formed was separated through filtration, and then dried at 60°C under reduced pressure for 4 hours. Thus obtained, the ethylene-1-octene copolymer weighed 33.8 g. Its weight-average molecular weight (Mw) was 61,000 in terms of ethylene; and its molecular weight distribution (Mw/Mn) was 2.24.

The 1-octene content of the copolymer was 18.4 mol%.

### [Comparative Example I-2]

The same process as in Example I-3 was repeated, except that the component (C) was not added to the polymerization system. As a result, herein obtained was 18.3 g of ethylene-1-octene copolymer. Its weight-average molecular weight (Mw) was 64,000 in terms of ethylene; and its molecular weight distribution (Mw/Mn) was 2.06.

The 1-octene content of the copolymer was 18.3 mol%.

### [Example I-4]

The same process as in Example I-3 was repeated, except that 2,2-t-butyl-4,4-methylthiobisphenoxytitanium dichloride was used in place of (t-butylamido)dimethyl(tetramethyl-η⁵-cyclopentadienyl)silane-titanium dichloride. As a result, herein obtained was 29.3 g of ethylene-1-octene copolymer. Its weight-average molecular weight (Mw) was 31,000 in terms of ethylene; and its molecular weight distribution (Mw/Mn) was 2.24.

The 1-octene content of the copolymer was 18.4 mol%.

### [Comparative Example I-3]

The same process as in Example I-4 was repeated, except that the component (C) was not added to the polymerization system. As a result, herein obtained was 19.4 g of ethylene-1-octene copolymer. Its weight-average molecular weight (Mw) was 34,000 in terms of ethylene; and its molecular weight distribution (Mw/Mn) was 2.06.

The 1-octene content of the copolymer was 18.3 mol%.

### [Second aspect of the invention]

In this section, the second aspect of the invention will be simply referred to as "the invention".

### I. Catalyst for polymerization of olefins:

### 1. Components of catalyst for polymerization of olefins:

The catalyst of the invention for polymerization of olefins comprises (A) a transition metal compound, (B) a compound capable of reacting with a transition metal compound to form an ionic complex, and (C) a compound of formula (II-1) which will be described in detail hereinunder, and optionally (D) an alkylating agent. The constituent components are described below.

### (1) (A) Transition metal compound:

For its details, the same as in the section of the first aspect shall directly apply also to this section. (B) Compound capable of reacting with a transition metal compound to form an ionic complex:

The compound capable of reacting with a transition metal compound to form an ionic complex includes coordination complex compounds that comprise an anion with plural groups bonded to a metal, and a cation, and Lewis acids. Known are various coordination complex compounds that comprise an anion with plural groups bonded to a metal, and a cation. For example, compounds of the following general formula (II-2) or (II-3) are preferably used in the invention.

([L²³-H]^{g+})ₕ([M²³X²²X²³ . . . Xⁿ]^{(n-m)-})ᵢ (II-2)

([L²⁴]^{g+})ₕ([M²⁴X²²X²³ . . . Xⁿ]^{(n-m)-})ᵢ (II-3)

wherein L²⁴ indicates M²⁵, R⁵¹R⁵²M²⁶ or R⁵³₃C, which will be mentioned hereinafter; L²³ represents a Lewis base; M²³ and M²⁴ each represent a metal selected from Group 5 to Group 15 of the Periodic Table; M²⁵ represents a metal selected from Group 1, and Group 8 to Group 12 of the Periodic Table; M²⁶ represents a metal selected from Group 8 to Group 10 of the Periodic Table; X²² to Xn each represent a hydrogen atom, a dialkylamino group, an alkoxy group, an aryloxy group, an alkyl group having from 1 to 20 carbon atoms, an aryl group having from 6 to 20 carbon atoms, an alkylaryl group, an arylalkyl group, a substituted alkyl group, an organometalloid group, or a halogen atom; R⁵¹ and R⁵² each represent a cyclopentadienyl group, a substituted cyclopentadienyl group, an indenyl group, or a fluorenyl group; R⁵³ represents an alkyl group; m indicates the valency of M²³ or M²⁴, and represents an integer of from 1 to 7; n represents an integer of from 2 to 8; g indicates the ion valency of L²³-H or L²⁴, and represents an integer of from 1 to 7; h represents an integer of 1 or more; and i = h × g/(n-m).

Specific examples of M²³ and M²⁴ include atoms of B, Al, Si, P, As, Sb, etc.; those of M²⁵ include atoms of Ag, Cu, Na, Li, etc.; and those of M²⁶ include atoms of Fe, Co, Ni, etc. Specific examples of X²² to Xn include a dimethylamino group, a diethylamino group, etc., as a dialkylamino group; a methoxy group, an ethoxy group, an n-butoxy group, etc., as an alkoxy group; a phenoxy group, a 2,6-dimethylphenoxy group, a naphthyloxy group, etc., as an aryloxy group; a methyl group, an ethyl group, an n-propyl group, an isopropyl group, an n-butyl group, an n-octyl group, a 2-ethylhexyl group, etc., as an alkyl group having from 1 to 20 carbon atoms; a phenyl group, a p-tolyl group, a benzyl group, a pentafluorophenyl group, a 3,5-di(trifluoromethyl)phenyl group, a 4-tert-butylphenyl group, a 2,6-dimethylphenyl group, a 3,5-dimethylphenyl group, a 2,4-dimethylphenyl group, a 1,2-dimethylphenyl group, etc., as an aryl group having from 6 to 20 carbon atoms, an alkylaryl group or an arylalkyl group; F, Cl, Br, I, as a halogen; and a pentamethylantimonyl group, a trimethylsilyl group, a trimethylgermyl group, a diphenylarsenyl group, a dicyclohexylantimonyl group, a diphenylboryl group, etc., as an organometalloid group. Specific examples of the substituted cyclopentadienyl group for R⁵¹ and R⁵² include a methylcyclopentadienyl group, a butylcyclopentadienyl group, a pentamethylcyclopentadienyl group, etc.

In. the invention, concretely, the anion with plural groups bonded to a metal includes B(C₆F₅)₄⁻, B(C₆HF₄)₄⁻, B(C₆H₂F₃)₄⁻, B(C₆H₃F₂)₄⁻, B(C₆H₄F)₄⁻, B[C₆(CF₃)F₄]₄⁻, B(C₆H₅)₄⁻, PF₆⁻, P(C₆F₅)₆⁻, Al(C₆HF₄)₄⁻, etc. The cation includes, for example, Cp₂Fe⁺, (MeCp)₂Fe⁺, (tBuCp)₂Fe⁺, (Me₂Cp)₂Fe⁺, (Me₃Cp)₂Fe⁺, (Me₄Cp)₂Fe⁺, (Me₅CP)₂Fe⁺, Ag⁺, Na⁺, Li⁺, etc. The other cations include, for example, those from nitrogen-containing compounds, such as pyridinium, 2,4-dinitro-N,N-diethylanilinium, diphenylammonium, p-nitroanilinium, 2,5-dichloroanilinium, p-nitro-N,N-dimethylanilinium, quinolinium, N,N-dimethylanilinium, N,N-diethylanilinium, etc.; those from carbenium compounds such as triphenylcarbenium, tri(4-methylphenyl)carbenium, tri(4-methoxyphenyl)carbenium, etc.; alkylphosphonium ions such as CH₃PH₃⁺, C₂H₅PH₃⁺, C₃H₇PH₃⁺, (CH₃)₂PH₂⁺, (C₂H₅)₂PH₂⁺, (C₃H₇)₂PH₂⁺, (CH₃)₃PH⁺, (C₂H₅)₃PH⁺, (C₃H₇)₃PH⁺, (CF₃)₃PH⁺, (CH₃)₄P⁺, (C₂H₅)₄P⁺, (C₃H₇)₄P⁺, etc.; arylphosphonium ions such as C₆H₅PH₃⁺, (C₆H₅)₂PH₂⁺, (C₆H₅)₃PH⁺, (C₆H₅)₄P⁺, (C₂H₅)₂(C₆H₅)PH⁺, (CH₃)(C₆H₅)PH₂⁺, (CH₃)₂(C₆H₅)PH⁺, (C₂H₅)₂(C₆H₅)₂P⁺, etc.

Of the compounds of formulae (II-2) and (II-3), concretely, the following are especially preferred. Preferred examples of the compounds of formula (II-2) include triethylammonium tetraphenylborate, tri(n-butyl)ammonium tetraphenylborate, trimethylammonium tetraphenylborate, triethylammonium tetrakis(pentafluorophenyl)borate, tri(n-butyl)ammonium tetrakis(pentafluorophenyl)borate, triethylammonium hexafluoroarsenate, pyridinium tetrakis(pentafluorophenyl)borate, pyrrolinium tetra(pentafluorophenyl)borate, N,N-dimethylanilinium tetrakis(pentafluorophenyl)borate, methyldiphenylammonium tetrakis(pentafluorophenyl)borate, etc. Preferred examples of the compounds of formula (II-3) include ferrocenium tetraphenylborate, dimethylferrocenium tetrakis(pentafluorophenyl)borate, ferrocenium tetrakis(pentafluorophenyl)borate, decamethylferrocenium tetrakis(pentafluorophenyl)borate, acetylferrocenium tetrakis(pentafluorophenyl)borate, formylferrocenium tetrakis(pentafluorophenyl)borate, cyanoferrocenium tetrakis(pentafluorophenyl)borate, silver tetraphenylborate, silver tetrakis(pentafluorophenyl)borate, trityl tetraphenylborate, trityl tetrakis(pentafluorophenyl)borate, silver hexafluoroarsenate, silver hexafluoroantimonate, silver tetrafluoroborate, etc.

The Lewis acid includes, for example, B(C₆F₅)₃, B(C₆HF₄)₃, B(H₂F₃)₃, B(C₆H₃F₂)₃, B(C₆H₄F)₃, B(C₆H₅)₃, BF₃, B[C₆(CF₃)F₄]₃, PF₅, P(C₆F₅)₅, Al(C₆HF₄)₃, etc.

### (C) Component:

This is a compound of the following general formula (II-1):

((R³¹)₃-X²⁰-Y²⁰)n-Z²⁰-(R³²)m-n (II-1)

wherein R³¹ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R³¹'s may be the same or different, and R³¹'s may be optionally bonded to each other to form a cyclic structure; X²⁰ represents an element of Group 14; Y²⁰ represents an element of Group 16; Z²⁰ represents a metal element of Groups 2 to 13; R³² represents a hydrocarbon group; m is an integer, indicating the valency of the metal element; and n is an integer of from 1 to (m-1).

Especially preferred are the following compounds: (1) X²⁰ is carbon, Y²⁰ is oxygen, and Z²⁰ is aluminium; (2) at least one of three R³¹'s is an aromatic hydrocarbon group having from 6 to 30 carbon atoms; (3) three R³¹'s are all hydrocarbon groups each having at least one carbon atom; (4) three R³¹'s are all hydrocarbon groups each having from 4 to 30 carbon atoms; (5) three R³¹'s are all aromatic hydrocarbon groups each having from 6 to 30 carbon atoms, preferably phenyl groups; (6) R³² is an alkyl group having at least 2 carbon atoms.

Concretely, more preferred those where R³¹'s are all phenyl groups, X²⁰ is carbon, Y²⁰ is oxygen, Z²⁰ is aluminium, n = 1, and R³² is an isobutyl group.

The compounds for the component (C) are not specifically defined for their production method, so far as they have the structure of the formula mentioned above, but preferred are those produced by reacting <1> a compound of a general formula, (R³¹)₃-C-OR³³ or <1> at least one selected from compounds of a general formula, (R³¹)₃-C-OR³³, R³⁴-CO-R³⁵ or R³⁶-CO-OR³⁷, with <2> a compound of a general formula, Z(R³²)m. (In these formulae, R³¹ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R³¹'s may be the same or different, and R³¹'s may be optionally bonded to each other to form a cyclic structure; R³³, R³⁴, R³⁵, R³⁶ and R³⁷ each represent a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, and R³³, R³⁴, R³⁵, R³⁶ and R³⁷ may be the same or different; Z²⁰ represents a metal element of Groups 2 to 13; m is an integer, indicating the valency of the metal element Z²⁰; and R³² represents a hydrocarbon group.

Concretely, they are reaction products of at least one selected from alcohols, ethers, aldehydes, ketones, carboxylic acids and carboxylates, with an aluminium compound. Preferred are reaction products of alcohols with an aluminium compound. For these, preferred are the following: (1) at least one of three R³¹'s is an aromatic hydrocarbon group having from 6 to 30 carbon atoms; (2) three R³¹'s are all hydrocarbon groups each having at least one carbon atom; (3) three R³¹'s are all hydrocarbon groups each having from 4 to 30 carbon atoms; (4) three R³¹'s are all aromatic hydrocarbon groups each having from 6 to 30 carbon atoms, preferably phenyl groups; (5) R³² is an alkyl group having at least 2 carbon atoms. Concretely, more preferred are those where R³¹'s are all phenyl groups, and R³² is an isobutyl group. Most preferred is a reaction product of triphenylmethyl alcohol with triisobutylaluminium.

The reaction condition for the compound <1> and the compound <2> is not specifically defined, but is preferably as follows: They are blended in a ratio by mol, compound <1>/compound <2> falling between 1/0.1 and 1/10, more preferably between 1/0.5 and 1/2, even more preferably between 1/0.8 and 1/1.2. The reaction temperature falls between - 80°C and 300°C, more preferably between -10°C and 50°C; and the reaction time falls between 0.1 minutes and 50 hours, preferably between 0.1 minutes and 3 hours. The solvent for the reaction is not also specifically defined, but is preferably the same one as that for polymerization to be effected in the presence of the catalyst.

In place of using the compound of the above-mentioned general formula as the component (C), a compound of the following (C1) and a compound of the following (C2) may be directly added to the site of catalyst production or to the site of polymerization to form the component (C) in situ. In this case, the catalyst components are the transition metal compound (A), the compound (B) capable of reacting with a transition metal to form an ionic complex, the compounds (C1) and (C2), and optionally an alkylating agent (D).

(C1) is a compound of a general formula, (R³¹)₃-C-OR³³, or at least one selected from compounds of a general formula, (R³¹)₃-C-OR³³, R³⁴-CO-R³⁵ or R³⁶-CO-OR³⁷; and (C2) is a compound of a general formula, Z(R³²)m.

In these formulae, R³¹ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R³¹'s may be the same or different, and R³¹' s may be optionally bonded to each other to form a cyclic structure; R³³, R³⁴, R³⁵, R³⁶ and R³⁷ each represent a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, and R³³, R³⁴, R³⁵, R³⁶ and R³⁷ may be the same or different; Z²⁰ represents a metal element of Groups 2 to 13; m is an integer, indicating the valency of the metal element Z²⁰; and R³² represents a hydrocarbon group.

Concretely, (C1) is at least one selected from alcohols, ethers, aldehydes, ketones, carboxylic acids and carboxylates, preferably from alcohols; and (C2) is an aluminium compound. For these, preferred are the following: (1) at least one of three R³¹'s is an aromatic hydrocarbon group having from 6 to 30 carbon atoms; (2) three R³¹'s are all hydrocarbon groups each having at least one carbon atom; (3) three R³¹'s are all hydrocarbon groups each having from 4 to 30 carbon atoms; (4) three R³¹'s for are all aromatic hydrocarbon groups each having from 6 to 30 carbon atoms, preferably phenyl groups; (5) R³² is an alkyl group having at least 2 carbon atoms. More concretely, the most preferred combination is (C1) of triphenylmethyl alcohol and (C2) of triisobutylaluminium.

### (D) Alkylating agent:

The catalyst of the invention for production of olefinic polymers optionally contains an alkylating agent. For the details of the alkylating agent, the same as in the section of the first aspect shall directly apply also to this section.

### 2. Method for producing catalyst:

### (1) Order of contacting constituent components:

To produce the catalyst of the invention, the order of contacting the constituent components with each other is not specifically defined. For its details, the same as in the section of the first aspect shall directly apply also to this section.

### (2) Blend ratio of constituent components:

<1> Regarding the ratio by mol of the component (A) to the component (B), referred to is a case where an organoaluminium compound is used as the component (B), a compound capable of reacting with a transition metal compound to form an ionic complex. In that case, the molar ratio of the component (A) to the component (B) may fall between 1/1 and 1/10,000, but preferably between 1/10 and 1/1,000, in terms of the molar ratio to the aluminium atom in (B).
<2> Regarding the ratio by mol of the component (A) to the component (C), referred to is a case where an aluminium compound is used as the component (C). In that case, the molar ratio of the component (A) to the component (C) may fall between 1/0.5 and 1/1,000, but preferably between 1/0.8 and 1/100, more preferably between 1/1 and 1/100, in terms of the molar ratio to the aluminium atom in (C). Regarding the ratio by mol of the component (A) to the component (D), referred to is a case where an aluminium compound is used as the component (D). In that case, the molar ratio of the component (A) to the component (D) may fall between 1/0.5 and 1/1,000, but preferably between 1/1 and 1/100, in terms of the molar ratio to the aluminium atom in (D).
<3> Where the catalyst contains a combination of the component (C1) and the component (C2), but not the component (C), the.molar ratio of (C1) to (C2) may fall between 1/0.1 and 1/50, precisely between 1/0.1 and 1/10, or between 1/0.5 and 1/20, or between 1/0.8 and 1/10, or between 1/0.5 and 1/2, or between 1/0.8 and 1/1.2, but most preferably between 1/0.8 and 1/10. Regarding the ratio by mol of the component (A) to the component (C2), referred to is a case where an aluminium compound is used as the component (C2). In that case, the molar ratio of the component (A) to the component (C2) may fall between 1/0.5 and 1/1,000, but preferably between 1/1 and 1/100, in terms of the molar ratio to the aluminium atom in (C2). Regarding the blend ratio of the component (D), the same as in the case <2> shall apply also to the case <3>.

### (3) Condition for contacting constituent components:

To produce the catalyst, the constituent components may be contacted with each other in an inert atmosphere of nitrogen or the like, at a temperature not higher than the temperature at which the catalyst is used for polymerization. As the case may be, they may be contacted with each other at a temperature falling between -30 and 200°C.

(4) In the invention, the components constituting the catalyst, especially the component (B) may be carried on a suitable carrier. For the details of the carrier, the same as in the section of the first aspect shall directly apply also to this section.

### II. Method for producing olefinic polymers:

### 1. Monomers to be polymerized:

In the method of the invention for producing olefinic polymers, used is the above-mentioned catalyst for polymerization of olefins. The catalyst is favorable to homopolymerization of olefins and to copolymerization of olefins with other olefins (that is, copolymerization of different types of olefins).

Olefins for the method are not specifically defined, but preferred are α-olefins having from 2 to 20 carbon atoms. Especially preferred are ethylene and propylene. For further details of the monomers, olefins, the same as in the section of the first aspect shall directly apply also to this section.

In the invention, one or more olefins such as those mentioned above may be (co)polymerized in any desired combination.

### 2. Polymerization condition:

In the invention, the polymerization catalyst may be subjected to pre-polymerization. For its details, the same as in the section of the first aspect shall directly apply also to this section.

For the details of the method of polymerizing olefins, the same as in the section of the first aspect shall directly apply also to this section.

The amount of the catalyst to be used in the polymerization method is preferably so controlled that the component (A) may fall generally between 0.1 and 100 µmols, but preferably between 0.5 and 25 µmols, in one liter of the solvent used, in view of the polymerization activity and the reactor efficiency.

Regarding the polymerization condition, the pressure may fall generally between normal pressure and 2000 kg/cm²G (196 MPaG). The reaction temperature may fall generally between -50 and 250°C. For controlling the molecular weight of the polymer to be produced, the type and the amount of the catalyst components to be used and the polymerization temperature shall be suitably controlled, or hydrogen may be introduced into the polymerization system.

The invention is described in more detail with reference to the following Examples, which, however, are not intended to restrict the scope of the invention.

### [Example II-1]

(1) 0.875 ml of 2 M triisobutylaluminium was added to a toluene solution of 455 mg (1.75 mmols) of triphenylmethanol at -78°C, and stirred at room temperature for 24 hours. The concentration of the component (C) thus formed was 0.1 mols/liter.
(2) 360 ml of toluene, 40 ml of 1-octene, 1.0 ml of a toluene solution of 1.0 M triisobutylaluminium, 0.1 ml of a toluene solution of N,N-dimethylanilinium tetrakis(pentafluorophenyl)borate (10 mmols/liter), and 5 ml of the component (C) prepared in the step (1) were put into a 1.6-liter autoclave equipped with a catalyst feeder tube, in that order, and heated up to 70°C. Next, ethylene was introduced into the autoclave to have a pressure of 0.785 MPaG (8 kg/cm²G). Next, 1.0 µmol of (t-butylamido)dimethyl(tetramethyl-η⁵-cyclopentadienyl)silane-titanium dichloride dissolved in 20 ml of toluene was put into the autoclave via the catalyst feeder tube. Ethylene was continuously introduced into the autoclave so as to have all the time the constant pressure of 8.0 kg/cm²G, and polymerized for 60 minutes. Next, methanol was added to this to stop the polymerization. A large amount of methanol was added to this, and the polymer formed was separated through filtration, and then dried at 60°C under reduced pressure for 4 hours. Thus obtained, the ethylene-1-octene copolymer weighed 46.1 g. As measured through GPC, its weight-average molecular weight was 1,270,000 in terms of ethylene, and its molecular weight distribution was 2.46. As measured through ¹H-NMR, the 1-octene content of the copolymer was 18.4 mol%.

### [Comparative Example II-1]

The same process as in Example II-1 was repeated, except that the component (C) prepared in the step of Example II-1 (1) was not added to the polymerization system in the step of Example II-1 (2). As a result, herein obtained was 35.3 g of ethylene-1-octene copolymer. As measured through GPC, its weight-average molecular weight was 1,170,000 in terms of ethylene, and its molecular weight distribution was 2.38. As measured through ¹H-NMR, the 1-octene content of the copolymer was 16.7 mol%.

### [Example II-2]

4:00 ml of toluene, 1.0 ml of a toluene solution of 1.0 M triisobutylaluminium, 0.1 ml of a toluene solution of tris(pentafluorophenyl)borane (10 mmols/liter), and 5 ml of the component (C) prepared in the step of Example II-1 (1) were put into a 1.6-liter autoclave equipped with a catalyst feeder tube, in that order, and heated up to 70°C. Next, ethylene was introduced into the autoclave to have a pressure of 0.785 MPaG (8 kg/cm²G). Next, 1.0 µmol of (t-butylamido) dimethyl (tetramethyl-η⁵-cyclopentadienyl)silane-titaniumdimethyl dissolved in 20 ml of toluene was put into the autoclave via the catalyst feeder tube. Ethylene was continuously introduced into the autoclave so as to have all the time the constant pressure of 0.785 MPaG (8.0 kg/cm²G), and polymerized for 60 minutes. Next, methanol was added to this to stop the polymerization. A large amount of methanol was added to this, and the polymer formed was separated through filtration, and then dried at 60°C under reduced pressure for 4 hours. Thus obtained, the ethylene polymer weighed 16.2 g. As measured through GPC, its weight-average molecular weight was 1,140,000 in terms of ethylene, and its molecular weight distribution was 1.98.

### [Comparative Example II-2]

The same process as in Example II-2 was repeated, except that the component (C) prepared in the step of Example II-1 (1) was not added to the polymerization system. As a result, herein obtained was 10.5 g of ethylene polymer. As measured through GPC, its weight-average molecular weight was 1,090,000 in terms of ethylene, and its molecular weight distribution was 2.02.

### [Example II-3]

The same process as in Example II-2 was repeated, except that pentamethylcyclopentadienyltitanium trimethoxide was used in place of (t-butylamido)dimethyl(tetramethyl-η⁵-cyclopentadienyl)silane-titaniumdimethyl. As a result, herein obtained was 5.4 g of ethylene polymer. As measured through GPC, its weight-average molecular weight was 1,090,000 in terms of ethylene, and its molecular weight distribution was 2.02.

### [Comparative Example II-3]

The same process as in Example II-3 was repeated, except that the component (C) was not added to the polymerization system. As a result, herein obtained was 3.7 g of ethylene polymer. As measured through GPC, its weight-average molecular weight was 1,090,000 in terms of ethylene, and its molecular weight distribution was 2.02.

### [Example II-4]

### (1) Preparation of component (C):

0.875 ml of 2 M triisobutylaluminium was added to a toluene solution of 1.75 mmols of tricyclohexylmethanol (from Across) at -78°C, and stirred at room temperature for 24 hours. The concentration of the component (C) thus formed was 0.1 mols/liter.

Through ¹H-NMR, the product was confirmed to have the component (C) formed therein.

### (2) Polymerization of ethylene:

Ethylene was polymerized in the same manner as in Example II-1, except that the compound prepared in the above step (1) was used as the component (C) in place of that prepared in the step of Example II-1 (1). As a result, herein obtained was 8.7 g of ethylene polymer. As measured through GPC, its weight-average molecular weight was 1,100,000 in terms of ethylene, and its molecular weight distribution was 2.05.

### [Example II-5]

The same process as in Example II-2 was repeated, except that dimethylsilylenebisbenzoindenylzirconium dichloride was used in place of (t-butylamido)dimethyl(tetramethyl-η⁵-cyclopentadienyl)silane-titaniumdimethyl, and that propylene was used in place of ethylene. As a result, herein obtained was 34.1 g of propylene polymer. As measured through GPC, its weight-average molecular weight was 1,050,000, and its molecular weight distribution was 2.03.

### [Comparative Example II-4]

The same process as in Example II-5 was repeated, except that the component (C) was not added to the polymerization system. As a result, herein obtained was 16.4 g of propylene polymer. As measured through GPC, its weight-average molecular weight was 980,000, and its molecular weight distribution was 2.04.

### INDUSTRIAL APPLICABILITY

The catalysts of the invention for polymerization of olefins have the advantages of enhancing the polymerization activity and reducing the amount of the promoter such as oxygen-containing compounds, etc. using them, therefore, olefinic polymers can be produced efficiently and inexpensively.

## Claims

1. A catalyst for polymerization of olefins, which comprises:
(A) a transition metal compound,
(B) an oxygen-containing compound,
(C) a compound of a general formula (I-1):
((R¹)₃-C-Y)n-Z-(R²)m-n (I-1)
wherein R¹ represents an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R¹'s may be the same or different, and R¹'s may be optionally bonded to each other to form a cyclic structure; Y represents an element of Group 16; Z represents a metal element of Groups 2 to 13; R² represents a hydrocarbon group; m is an integer, indicating the valency of the metal element Z; and n is an integer of from 1 to (m-1),
and optionally,
(D) an alkylating agent.

2. The catalyst as claimed in claim 1 for polymerization of olefins, wherein, in (C), Y is oxygen and Z is aluminium.

3. The catalyst as claimed in claim 1 for polymerization of olefins, wherein the compound (C) is a reaction product of a compound of a general formula, (R¹)₃-C-OR³, and a compound of a general formula, Z(R²)m:
in which R¹ represents an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R¹'s may be the same or different, and R¹'s may be optionally bonded to each other to form a cyclic structure; R³ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group; Z represents a metal element of Groups 2 to 13; m is an integer, indicating the valency of the metal element Z; and R² represents a hydrocarbon group.

4. A catalyst for polymerization of olefins, which comprises:
(A) a transition metal compound,
(B) an oxygen-containing compound,
(C1) a compound of a general formula, (R¹)₃-C-OR³:
wherein R¹ represents an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R¹'s may be the same or different, and R¹'s may be optionally bonded to each other to form a cyclic structure; R³ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group,
(C2) a compound of a general formula, Z(R²)m, wherein Z represents a metal element of Groups 2 to 13; m is an integer, indicating the valency of the metal element Z; and R² represents a hydrocarbon group,
and optionally,
(D) an alkylating agent.

5. The catalyst for polymerization of olefins as claimed in any of claims 1 to 4, wherein at least one of three R¹'s is an aromatic hydrocarbon group having from 6 to 30 carbon atoms.

6. The catalyst for polymerization of olefins as claimed in any of claims 1 to 4, wherein three R¹'s are all aromatic hydrocarbon groups each having from 6 to 30 carbon atoms.

7. The catalyst for polymerization of olefins as claimed in any of claims 1 to 4, wherein three R¹'s are all phenyl groups.

8. The catalyst for polymerization of olefins as claimed in any of claims 1 to 7, wherein R² is an alkyl group having at least 2 carbon atoms.

9. The catalyst for polymerization of olefins as claimed in any of claims 3 to 8, wherein Z is aluminium.

10. The catalyst for polymerization of olefins as claimed in any of claims 1 to 9, wherein the transition metal compound (A) is represented by any of the following general formulae (I-2) to (I-6):
Q¹ ₐ(C₅H_{5-a-b}R⁸ _{b}) (C₅H_{5-a-c}R⁹ _{c})M¹X¹Y¹ (I-2)
Q² ₐ(C₅H_{5-a-d}R¹⁰ _{d}) Z¹M¹X¹Y¹ (I-3)
(C₅H₅₋ₑR¹¹ ₑ)M¹X¹Y¹W¹ (I-4)
M¹X¹Y¹W¹U¹ (I-5)
L¹L²M²X¹Y¹ (I-6)
in which Q¹ represents a bonding group that crosslinks the two conjugated five-membered cyclic ligands (C₅H_{5-a-b}R⁸_{b}) and (C₅H_{5-a-c}R⁹_{c}); Q² represents a bonding group that crosslinks the conjugated five-membered cyclic ligand (C₅H_{5-a-d}R¹⁰_{d}) and the group Z¹; R⁸, R⁹, R¹⁰ and R¹¹ each represent a hydrocarbon group, a halogen atom, an alkoxy group, a siliconcontaining hydrocarbon group, a phosphorus-containing hydrocarbon group, a nitrogen-containing hydrocarbon group, or a boron-containing hydrocarbon group; and a plurality of these groups, if any, may be the same or different, and may be bonded to each other to form a cyclic structure; a represents 0, 1 or 2; b, c and d each represent an integer of from 0 to 5 when a = 0, or an integer of from 0 to 4 when a = 1, or an integer of from 0 to 3 when a = 2; e is an integer of from 0 to 5; M¹ represents a transition metal of Groups 4 to 6 of the Periodic Table; M² represents a transition metal of Groups 8 to 10 of the Periodic Table; L¹ and L² each represent a coordination-bonding ligand; X¹, Y¹, Z¹, W¹ and U¹ each represent a covalent-bonding or ionic-bonding ligand; and L¹, L², X¹, Y¹, Z¹, W¹ and U¹ may be bonded to each other to form a cyclic structure.

11. The catalyst for polymerization of olefins as claimed in claim 10, wherein, in the transition metal compound (A) of formula (I-4), the group (C₅H₅₋ₑR¹¹ₑ) is represented by any of the following general formulae (I) to (VII): 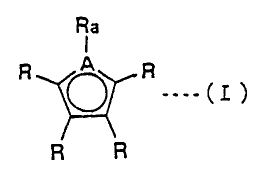 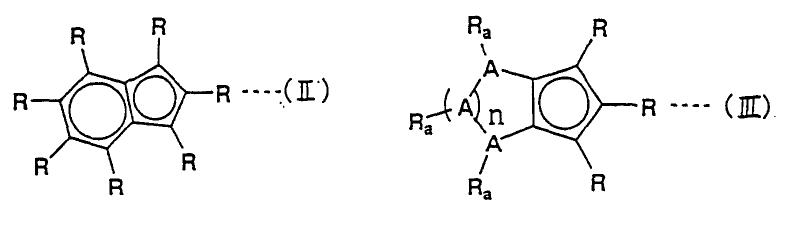 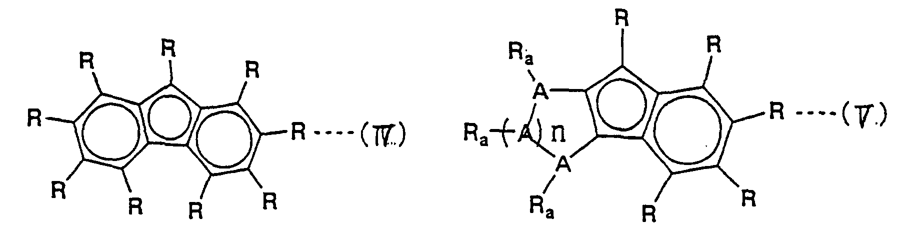 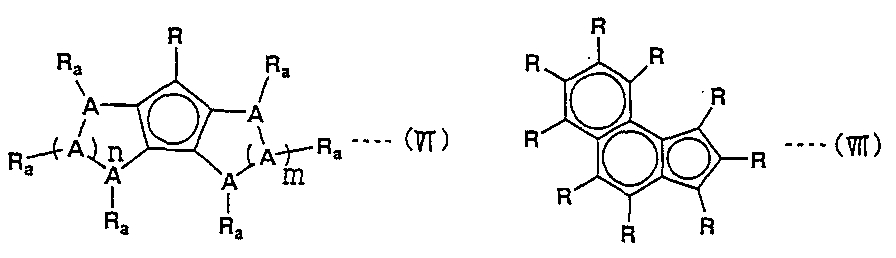 wherein A represents an element of Group 13, 14, 15 or 16, and plural A's may be the same or different; R represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl or akylsilylalkyl group having from 3 to 30 carbon atoms, and R's may be the same or different, and may be optionally bonded to each other to form a cyclic structure; a represents 0, 1 or 2; and n and m each represent an integer of at least 1.

12. A method for producing olefinic polymers, which comprises polymerizing olefins in the presence of the polymerization catalyst of any of claims 1 to 11.

13. A catalyst for polymerization of olefins, which comprises:
(A) a transition metal compound,
(B) a compound capable of reacting with a transition metal compound to form an ionic complex,
(C) a compound of a general formula (II-1):
((R³¹)₃-X²⁰-Y²⁰)n-Z²⁰-(R³²)m-n (II-1)
wherein R³¹ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R³¹'s may be the same or different, and R³¹'s may be optionally bonded to each other to form a cyclic structure; X²⁰ represents an element of Group 14; Y²⁰ represents an element of Group 16; Z²⁰ represents a metal element of Groups 2 to 13; R³² represents a hydrocarbon group; m is an integer, indicating the valency of the metal element Z²⁰; and n is an integer of from 1 to (m-1),
and optionally,
(D) an alkylating agent.

14. The catalyst for polymerization of olefins as claimed in claim 13, wherein, in (C), Y²⁰ is oxygen and Z²⁰ is aluminium.

15. The catalyst for polymerization of olefins as claimed in claim 13, wherein the compound (C) is a reaction product of a compound of a general formula, (R³¹)₃-C-OR³³, and a compound of a general formula, Z²⁰(R³²)m:
in which R³¹ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R³¹'s may be the same or different, and R³¹'s may be optionally bonded to each other to form a cyclic structure; Z²⁰ represents a metal element of Groups 2 to 13; R³² represents a hydrocarbon group; R³³ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms; an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, and may be the same or different; m is an integer, indicating the valency of the metal element Z²⁰; and n is an integer of from 1 to (m-1).

16. A catalyst for polymerization of olefins, which comprises:
(A) a transition metal compound,
(B) a compound capable of reacting with a transition metal compound to form an ionic complex,
(C1) a compound of a general formula, (R³¹)₃-C-OR³³:
wherein R³¹ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, R³¹'s may be the same or different, and R³¹'s may be optionally bonded to each other to form a cyclic structure; R³³ represents a hydrogen atom, a halogen atom, an aliphatic hydrocarbon group having from 1 to 30 carbon atoms, an aromatic hydrocarbon group having from 6 to 30 carbon atoms, an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, or a carboxyl group, and may be the same or different,
(C2) a compound of a general formula, Z²⁰(R³²)m, wherein Z²⁰ represents a metal element of Groups 2 to 13; m is an integer, indicating the valency of the metal element Z²⁰; and R³² represents a hydrocarbon group,
and optionally,
(D) an alkylating agent.

17. The catalyst for polymerization of olefins as claimed in any of claims 13 to 16, wherein at least one of three R³¹'s is an aromatic hydrocarbon group having from 6 to 30 carbon atoms.

18. The catalyst for polymerization of olefins as claimed in any of claims 13 to 16, wherein three R³¹'s are all aromatic hydrocarbon groups each having from 6 to 30 carbon atoms.

19. The catalyst for polymerization of olefins as claimed in any of claims 13 to 16, wherein three R³¹'s are all phenyl groups.

20. The catalyst for polymerization of olefins as claimed in any of claims 13 to 19, wherein R³² is an alkyl group having at least 2 carbon atoms.

21. The catalyst for polymerization of olefins as claimed in any of claims 15 to 20, wherein Z is aluminium.

22. The catalyst for polymerization of olefins as claimed in any of claims 13 to 21, wherein the transition metal compound (A) is represented by any of the following general formulae (II-2) to (II-6):
Q²¹ ₐ(C₅H_{5-a-b}R³⁸ _{b}) (C₅H_{5-a-c}R³⁹ _{c})M²¹X²¹Y²¹ (II-2)
Q²¹ ₐ(C₅H_{5-a-d}R⁴⁰ _{d}) Z²¹M²¹X²¹Y²¹ (II-3)
(C₅H₅₋ₑR⁴¹ ₑ)M²¹X²¹Y²¹W²¹ (II-4)
M²¹X²¹Y²¹W²¹U²¹ (II-5)
L²¹L²²M²²X²¹Y²¹ (II-6)
in which Q²¹ represents a bonding group that crosslinks the two conjugated five-membered cyclic ligands (C₅H_{5-a-b}R³⁸_{b}) and (C₅H_{5-a-c}R³⁹_{c}); Q²² represents a bonding group that crosslinks the conjugated five-membered cyclic ligand (C₅H_{5-a-d}R⁴⁰_{d}) and the group Z²¹; R³⁸, R³⁹, R⁴⁰ and R⁴¹ each represent a hydrocarbon group, a halogen atom, an alkoxy group, a silicon-containing hydrocarbon group, a phosphorus-containing hydrocarbon group, a nitrogen-containing hydrocarbon group, or a boron-containing hydrocarbon group; and a plurality of these groups, if any, may be the same or different, and may be bonded to each other to form a cyclic structure; a represents 0, 1 or 2; b, c and d each represent an integer of from 0 to 5 when a = 0, or an integer of from 0 to 4 when a = 1, or an integer of from 0 to 3 when a = 2; e is an integer of from 0 to 5; M²¹ represents a transition metal of Groups 4 to 6 of the Periodic Table; M²² represents a transition metal of Groups 8 to 10 of the Periodic Table; L²¹ and L²² each represent a coordination-bonding ligand; X²¹, Y²¹, Z²¹, W²¹ and U²¹ each represent a covalent-bonding or ionic-bonding ligand; and L²¹, L²², X²¹, Y²¹, Z²¹, W²¹ and U²¹ may be bonded to each other to form a cyclic structure.

23. The catalyst for polymerization of olefins as claimed in claim 22, wherein, in the transition metal compound (A) of formula (II-4), the group (C₅H₅₋ₑR⁴¹ₑ) is represented by any of the following general formulae (I) to (VII): 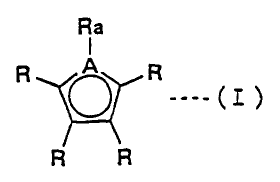 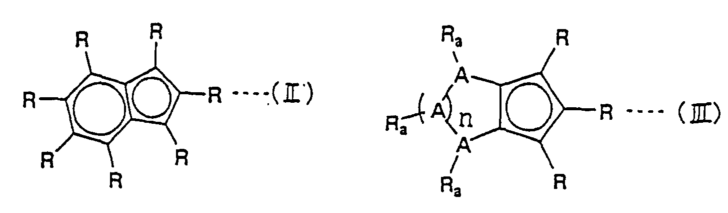 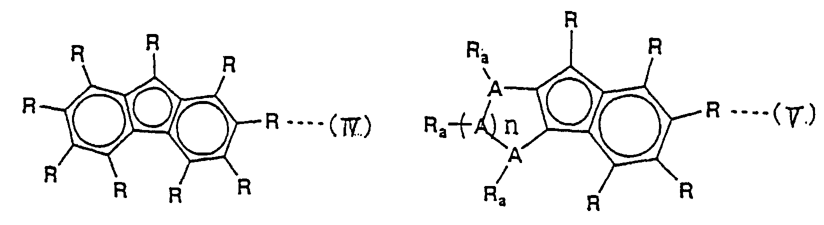 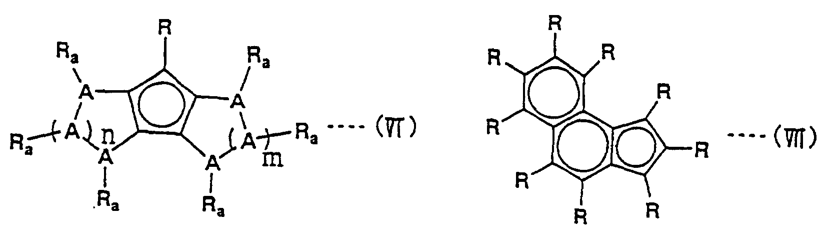 wherein A represents an element of Group 13, 14, 15 or 16, and plural A's may be the same or different; R represents a hydrogen atom, a halogen atom, an aliphatic hydrocarbon group having from 1 to 30 carbon atoms, an aromatic hydrocarbon group having from 6 to 30 carbon atoms , an alkoxy group having from 1 to 30 carbon atoms, an aryloxy group having from 6 to 30 carbon atoms, a thioalkoxy group having from 1 to 30 carbon atoms, a thioaryloxy group having from 6 to 30 carbon atoms, an amino group, an amido group, a carboxyl group, or an alkylsilyl or akylsilylalkyl group having from 3 to 30 carbon atoms, and R's may be the same or different, and may be optionally bonded to each other to form a cyclic structure; a represents 0, 1 or 2; and n and m each represent an integer of at least 1.

24. A method for producing olefinic polymers, which comprises polymerizing olefins in the presence of the polymerization catalyst of any of claims 13 to 23.
